# EUROPEAN PATENT APPLICATION

(11) **EP 2 365 646 A1**
(43) Date of publication of application: **14.09.2011**
(21) Application number: 10156433.4
(22) Date of filing: 12.03.2010
(51) Int. Cl.: H04B 7/185

(54) **Satellite beam monitoring by using a monitoring satellite**

(71) Applicant: Inmarsat Global Limited, London EC1Y 1AX (GB)
(72) Inventor: Garstang, Brian, London, EC1Y 1AX (GB); Franchi, Antonio, London, EC1Y 1AX (GB); Howell, William Alan, London, N5 1JT (GB)
(74) Representative: Cross, James Peter Archibald

(57) **Abstract**

A method of monitoring at least one beam of a satellite, the at least one beam being directed at a body around which the satellite orbits, the method comprising monitoring the at least one beam using a monitoring satellite which orbits around the body.

## Description

### Field of the Invention

The present invention relates particularly, but not exclusively, to a method, monitoring satellite, receiver, system, computer program and apparatus for monitoring at least one beam of a satellite.

### Background to the Invention

Operators of satellite systems need to monitor various transmission properties of their satellites, such as the centre frequencies of frequency channels, carrier to noise ratios (C/No), link quality and Effective Isotropic Radiated Power (EIRP). Some or all of these properties may be measured directly or indirectly by receiving user terminals and reported back to the system, for example to assist in power control, Doppler correction or variable data rate techniques. However, the availability and geographical spread of user terminals is outside the control of the satellite operator, which cannot therefore rely on user terminals for comprehensive monitoring of the transmission properties of a satellite.

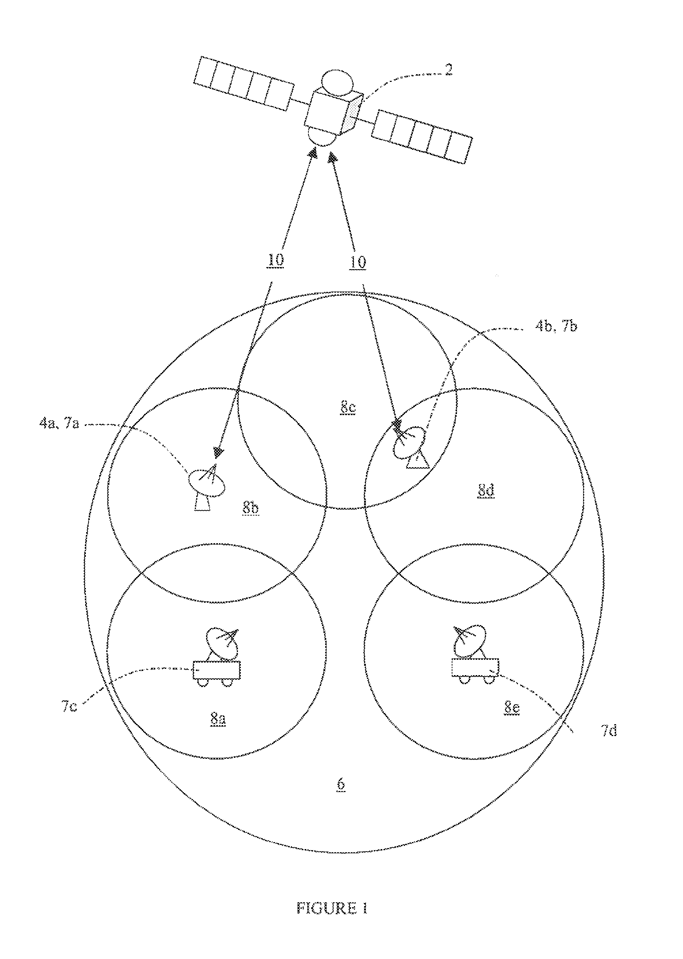

Hence, there is a need for satellite monitoring stations located in representative geographical locations. As an example, a satellite monitoring system currently used for the applicant's Inmarsat-3™ satellites will now be described with reference to Figure 1.

The Inmarsat™ mobile satellite communications system includes a plurality of geostationary Inmarsat-3™ satellites 2, one of which is shown in Figure 1. The satellite 2 generates a global beam 6 and five spot beams 8a-e which fall within the global beam 6, the beam patterns being substantially coterminous for transmission and reception. The spot beams 8a-e are used predominantly for communications traffic, while the global beam 6 is used predominantly for call set-up and communications traffic outside the coverage of the spot beams 6.

For each satellite 2, a plurality of land earth stations (LES) 4a-b act as satellite base stations and gateways to terrestrial networks. Each LES 4 communicates at C-band over a bidirectional feeder link 10 with the satellite 2, which maps frequency channels within the feeder link 10 to corresponding beams and L-band channels within the beams, according to a variable channel mapping configured on the satellite 2 under the control of a telemetry, tracking and control (TT&C) station (not shown).

To monitor the spot beams 8, a remote monitoring station (RMS) 7 needs to be located in each spot beam 8. The RMS 7 receives a current frequency plan, monitors L-band channels within the relevant spot beam or beams 8, and records channel measurements from which the required transmission properties of the satellite 2 can be derived. Each RMS must be kept operational as near continuously as possible, and must be calibrated so that the measurement results are reliable; therefore, it is convenient to collocate RMSs 7a, 7b with LESs 4a, 4b so that existing maintenance facilities can be used.

Moreover, the RMSs 7 must transmit monitoring data so that it can be processed by a central server. The data may be transmitted over the satellite network, or over a wireline network such as an ISDN. Therefore, collocated RMSs 7a, 7b have the advantage of being able to use existing communications facilities at the LESs 4a, 4b to transmit this data.

If an LES 4b is located where two spot beams 8c, 8d overlap, the collocated RMS 7b is able to monitor both spot beams 8c, 8d, thus reducing the number of RMSs 7 required.

For those spot beams 8 which do not contain an LES 4, a transportable monitoring station (TMS) 7c, 7d may be provided. The TMSs 7c, 7d are conveniently located where suitable maintenance and/or terrestrial communication facilities are available. However, it is more difficult to provide the necessary maintenance and communications facilities to the TMSs 7c, 7d than to collocated RMSs 7a, 7b.

Whilst the above system is acceptable for monitoring satellites with a small number of spot beams, problems arise in adapting the system for satellites where the number of spot beams is very much greater. For example, the applicant's Inmarsat-4™ satellites each generate up to 19 regional beams and 256 spot beams. At present, the applicant employs a constellation of three Inmarsat-4™ satellites, each in geostationary orbit and operating in 192 narrow spot beams, to provide global coverage. Most of these beams do not cover an existing LES 4 and indeed it would be unrealistic to install detection systems in every beam; a very large number of TMSs 7, with a diverse geographical distribution, would be needed to ensure that every regional and spot beam contains at least one monitoring station 7. It would be extremely difficult to maintain such a large number of TMSs, particularly as some spot beams would cover only marine or mountainous areas. Moreover, the Inmarsat-4™ satellites have reconfigurable beam patterns, so that a distribution of monitoring stations 7 adequate to monitor one beam pattern configuration may not be adequate to monitor another.

Accordingly, there have previously been few (if indeed any) ways of determining whether all spot beams are working, and operators have typically relied upon on-board detection, and on customer complaints, to determine any spot beam outage.

The problems described above are not unique to Inmarsat™ satellite communications systems. As the demand for high-bandwidth satellite communications increases, the number of spot beams required also increases, to provide the necessary gain and frequency re-use for high bandwidth services. The problems are not unique to geostationary satellites, and may be more acute for non-geostationary satellites which generate a moving beam pattern. The problems are not unique to repeater satellites, and may be more acute with switching satellites, which may have fewer terrestrial gateways which can be used for satellite monitoring.

The applicant's PCT publication no. WO 2005/067367 seeks to address these problems by use of a multi-beam satellite configured to transmit a duplicate of a channel from one spot beam in another spot beam, which contains a remote monitoring station. The satellite is reconfigurable to select the channel which is duplicated, allowing the beams of the satellite to be monitored, without the need for a remote monitoring station in each beam. However, according to this system it is a duplicate of the channel which is monitored, rather than the original channel itself.

### Statement of the Invention

According to a first aspect of the present invention, there is provided a method of monitoring according to claim 1.

This method may potentially be particularly advantageous as according to embodiments the monitoring satellite may travel on its orbit to reach a beam covering a remote area which might otherwise be impractical to monitor using ground-based means. Further, according to embodiments the monitoring satellite may be used to monitor the beam at different locations within the beam, or may be used to monitor a moving beam, as it moves along its orbit. Yet further, according to embodiments the monitoring satellite may move at very high speeds along its orbit, so that the status of the beam may be quickly and easily assessed. Additionally, according to embodiments only a small amount of fuel may be required to keep the monitoring satellite on its orbit, potentially allowing for the monitoring of the communications satellite to be conducted continuously over a substantial period of time e.g. ten years before the monitoring satellite exhausts its fuel supplies. Yet further, according to embodiments the monitoring satellite may be used to monitor a number of different beams and/or monitoring satellites at different locations as it moves along its orbit.

According to a second aspect of the present invention, there is provided a method of monitoring according to claim 9.

According to a third aspect of the present invention, there is provided a monitoring satellite according to claim 10.

According to a fourth aspect of the present invention, there is provided a monitoring satellite according to claim 11.

According to a fifth aspect of the present invention, there is provided a receiver according to claim 12.

According to a sixth aspect of the present invention, there is provided a system according to claim 13.

According to a seventh aspect of the present invention, there is provided a computer program according to claim 14.

According to an eighth aspect of the present invention, there is provided apparatus according to claim 15.

### Brief Description of the Drawings

In order that the present invention may be more readily understood, embodiments thereof will now be described, by way of example only, with reference to the accompanying drawings, of which:
Figure 1 is a schematic diagram of a known satellite monitoring system;
Figure 2 is a schematic diagram of a satellite communications system which may be monitored according to an embodiment of the present invention;
Figure 3 is a schematic diagram of the satellite communications system of Figure 2 being monitored according to a first embodiment of the present invention;
Figure 4 is a flow-chart schematically illustrating an overview of a monitoring method using a monitoring satellite according to the first embodiment of the present invention;
Figure 5 is a schematic diagram of a payload of a monitoring satellite according to the first embodiment of the present invention;
Figure 6 schematically illustrates a portion of the payload of Fig. 5 in greater detail;
Figure 7 is a schematic diagram of elements of a ground station according to the first embodiment of the present invention;
Figure 8 is a flow-chart schematically illustrating a GPS position and time determination process according to the first embodiment of the present invention;
Figure 9 is a flow-chart schematically illustrating a scanning process according to the first embodiment of the present invention;
Figure 10 is a flow-chart schematically illustrating a scan, store and forward process according to the first embodiment of the present invention;
Figure 11 is a flow-chart schematically illustrating a data analysis process according to the first embodiment of the present invention;
Figure 12 is a flow-chart schematically illustrating a closed feedback monitoring process according to the first embodiment of the present invention;
Figure 13 is a schematic diagram of a payload of a monitoring satellite according to a second embodiment of the present invention;
Figure 14 is a flow-chart schematically illustrating a beam monitoring process according to the second embodiment of the present invention;
Figure 15 is a diagram of an example of a computer system on which one or more of the functions of the embodiments may be implemented; and
Figure 16 schematically illustrates a variety of orbit altitudes.

### Description of Embodiments

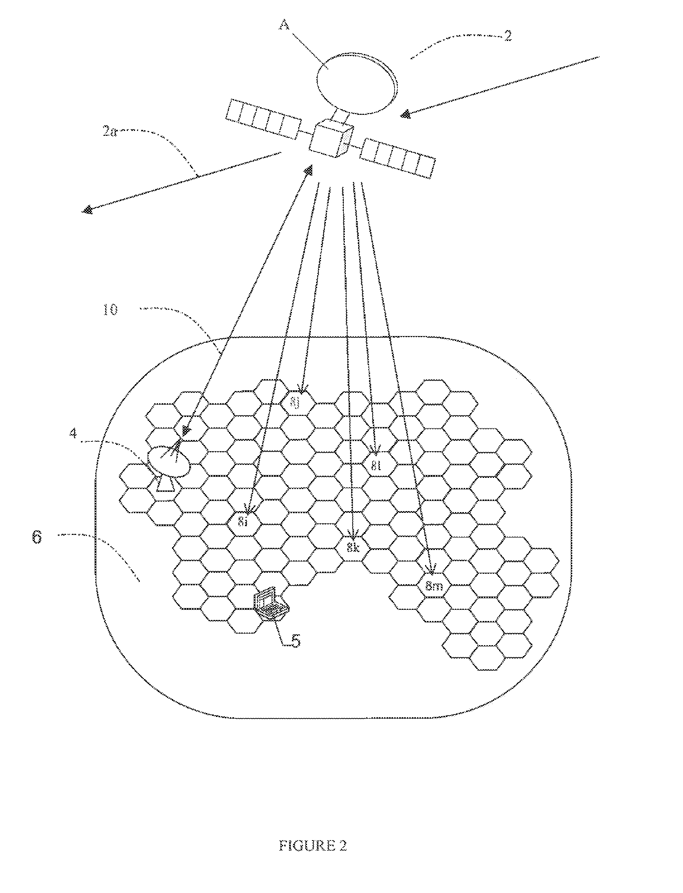

Figure 2 shows schematically an example of a communications satellite 2 in the form of a multibeam satellite having multiple communications beams which may be monitored according to an embodiment of the present invention. However, the present invention is not limited to the monitoring of multibeam satellites and the monitoring method of the present invention may be applied to other types of satellites, such as communications satellites having a single communications beam.

The multibeam communications satellite 2 illustrated in Fig. 2 travels in a geostationary orbit 2a and generates a large number of narrow spot beams 8, directed at the Earth, within the coverage area of its global beam 6. The beams 8 are defined by transmission and/or reception antenna patterns of an antenna arrangement A of the communications satellite 2. Typically, each beam comprises a central main beam portion, in which signals are transmitted and/or received above a threshold relative to maximum intensity, such as half maximum. The central main beam is surrounded by a plurality of side lobes, within which transmission and/or reception intensity continually decreases as the side lobes are located further from the central main beam. For the purposes of the present invention, the or each beam of the satellite may be considered to comprise at least the central main beam.

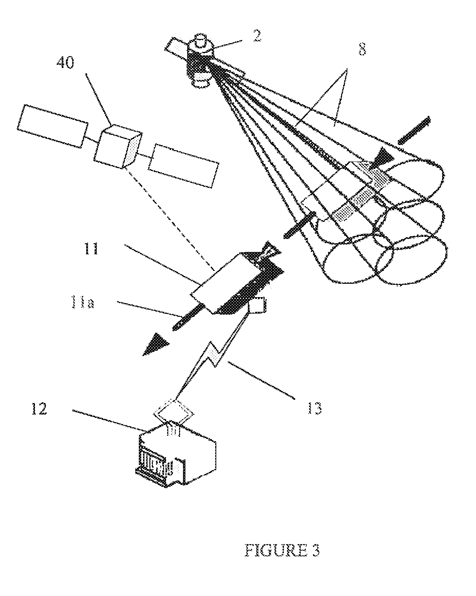

As illustrated in Figure 2, the spot beams 8 are arranged in an approximately hexagonal beam pattern covering most of the terrestrial and coastal areas within the field of view of the communications satellite 2. Each beam 8 is represented as having a hexagonal shape, for clarity, but in reality will have an approximately circular shape (as schematically represented in Fig. 3) distorted by the projection of the beam onto the surface of the earth. A frequency re-use pattern may be applied so that the same frequency channel is re-used between spot beams 8 having at least a minimum separation distance.

In the present system, the beams 8 carry user traffic and signalling both to and from system users e.g. user terminal 5. That is, each beam 8 represents a region within which communications signals may be sent to intended recipients (e.g. user terminal 5) by the communications satellite 2, and signals sent by sources (such as the user terminal 5) located within at least one of the beams may be received by the communications satellite 2. According to the present embodiment, in addition to user traffic, the communications satellite 2 also constantly transmits a calibration signal in each of its beams 8, in the form of an unmodulated sinusoidal carrier wave, at a known power level and frequency (which frequency is within the L-band frequency range in the present embodiment). In the present embodiment, the calibration signal is continually sent to the communications satellite 2 from the LES 4 for onward transmission in each of the beams 8. However, this does not have to be the case, and the communications satellite 2 may for example be provided with an onboard calibration signal generator to generate the calibration signal.

A representative user terminal 5 is shown in Figure 2, but the system is able to provide satellite communications services to a large number of such terminals 5. Although the present system uses the same beams 8 for both transmission and reception, this does not have to be the case and separate beams may instead be used for signal transmission and reception, which beams may or may not overlap, either wholly or partially.

The LES 4 provides a bidirectional feeder link 10 to the satellite. Each frequency channel at C-band in the feeder link 10 is mapped by the multibeam communications satellite 2 to a corresponding spot beam 8 transmitting signals in the L-band, which band ranges from around 1 to 2 GHz. This mapping is determined by a channel filter configuration on board the communications satellite 2. Note that different frequency channels in the feeder link 10 may be mapped to the same frequency in different ones of the spot beams 8 separated by the minimum separation distance.

In the present example, the communications signals sent in the beams 8 between the communications satellite 2 and users such as the user terminal 5 comprise digitally modulated signals, such as quadrature phase shift keying (QPSK) modulated signals, created by modulating a sinusoidal analogue carrier wave with a digital bit stream representing communication information. The user terminals 5 are capable of both demodulating signals sent to them by the communications satellite and of producing and transmitting modulated communications signals to the communications satellite 2.

In the present example, five representative spot beams 8i-8m will be considered, although the example can be extrapolated to all of the spot beams 8. None of these spot beams 8i-8m covers an RMS 7, yet all of them need to be monitored.

### First embodiment - overview

In the present embodiment, monitoring is achieved by use of a monitoring satellite 11, which as shown in Fig. 3 passes through the spot beams 8 of the communications satellite 2 as the monitoring satellite 11 travels along its orbit 11 a, which in the present embodiment is a Low Earth Orbit (LEO). As it does so, the monitoring satellite 11 obtains monitoring information for monitoring the various spot beams 8, by scanning through the L-band frequency range and recording information derived from any signals received from the communications satellite 2 in that range. Subsequently, the monitoring satellite 11 transmits or "dumps" the recorded information to a ground station 12 by a UHF transmission 13 once the monitoring satellite's orbit 11a brings the monitoring satellite 11 close enough to the ground station 12 to render such a UHF transmission possible. That is, the monitoring satellite 11 uses a "store and forward" technique to transmit the stored information to ground level, which is then analysed at the ground station 12 and/or is transmitted to other stations or locations for analysis, as desired. The entire process is then repeated, as the monitoring satellite 11 re-enters and again obtains monitoring information on the beams 8 and subsequently again passes and forwards this monitoring information to the ground station 12 as it travels along its orbit 11a.

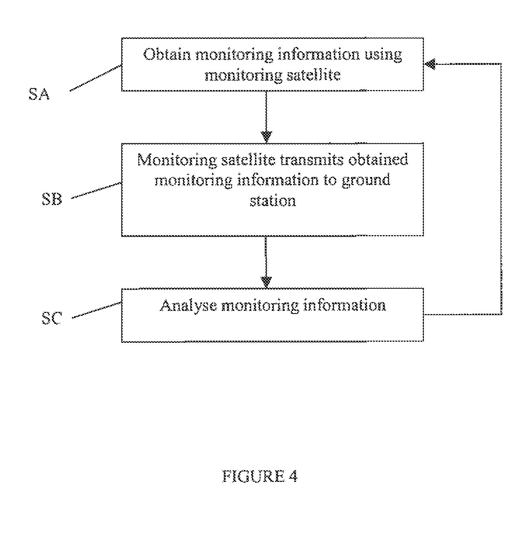

An overview of the monitoring method of the first embodiment is shown in Fig. 4. At step SA, the monitoring satellite is used to obtain monitoring information relating to the beams 8 of the communications satellite 2. At step SB, the monitoring satellite transmits the obtained monitoring information to the ground station 12. At step SC, the monitoring information is analysed. The process then returns to step SA, as the monitoring satellite 11 continues on its orbit 11a and re-enters the beams 8.

### Monitoring satellite and ground station structure

According to embodiments, the monitoring satellite 11 is preferably a "nano-satellite" or similar. Nano-satellites are generally defined as artificial satellites having a wet mass of less than 10 kg, and nano-satellite systems are typically relatively cheap, with advertised launch costs of around $100k. However, whereas nano-satellites are often designed to have a lifetime of days, the monitoring satellite 11 of the present embodiment will typically be designed to have a lifetime of decades. This may be achieved by constructing the monitoring satellite 11 to similar design standards and using similar processes and space-qualified components as may be employed for geostationary satellites. However, deviations from this approach may be made where a cost/risk impact becomes significant in the design of the monitoring satellite 11 e.g. if it becomes apparent that it is unnecessary to build on-board redundancy of certain components of the monitoring satellite 11. The present invention is not limited to the use of a nano-satellite type monitoring satellite 11, however, and any other suitable type of satellite may be used. For example, larger micro-satellites (generally defined as having a wet mass of between 10 kg to 100 kg) may be used for the monitoring satellite 11.

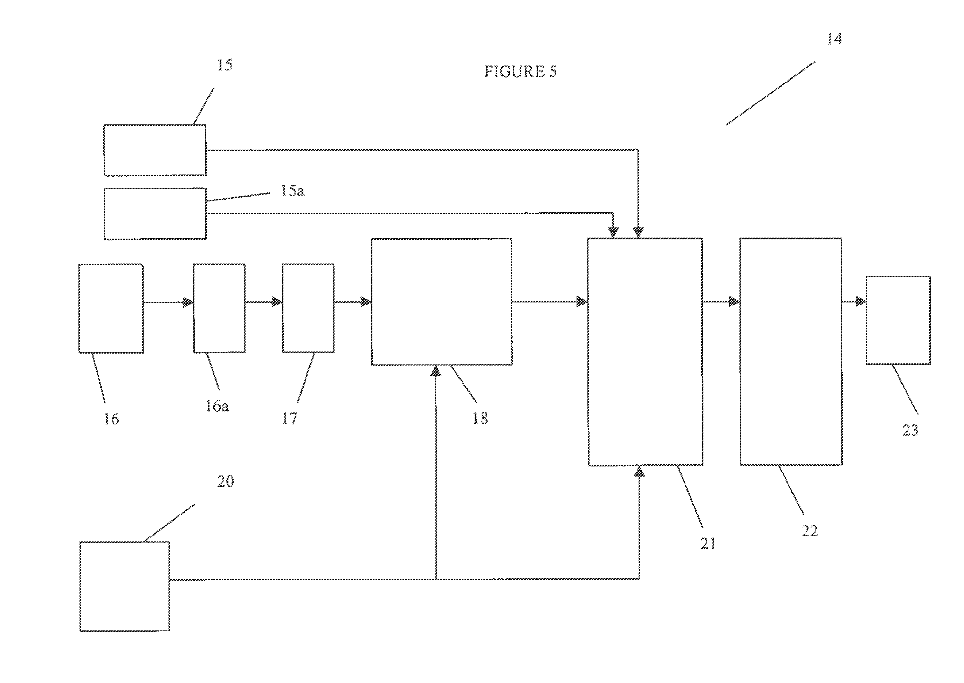

The monitoring satellite 11 is provided with a payload, generally indicated at 14 in Fig. 5, to enable it to conduct the above-mentioned scan, store and forward process. The payload 14 comprises a GPS receiver 15, magnetometer 15a, L-band antenna 16, pre-amp band-pass filter 16a, low noise amplifier 17, frequency scanning module 18, control processor 20, data storage module 21, UHF transmission module 22 and UHF antenna 23. Each of these components is selected to satisfy the applicable derived environmental requirements, such as power consumption, temperature stability etc.

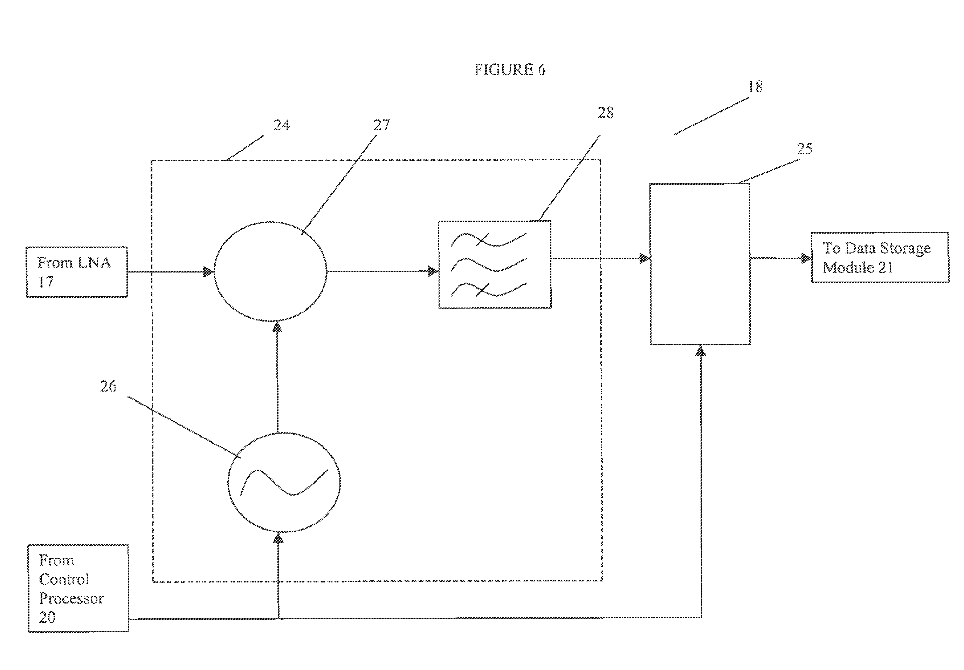

The frequency scanning module 18 is shown in greater detail in Fig. 6, and comprises a frequency downconversion module shown generally at 24 and a power meter 25. The frequency downconversion module 24 comprises a signal generator 26, mixer 27 and band pass filter 28.

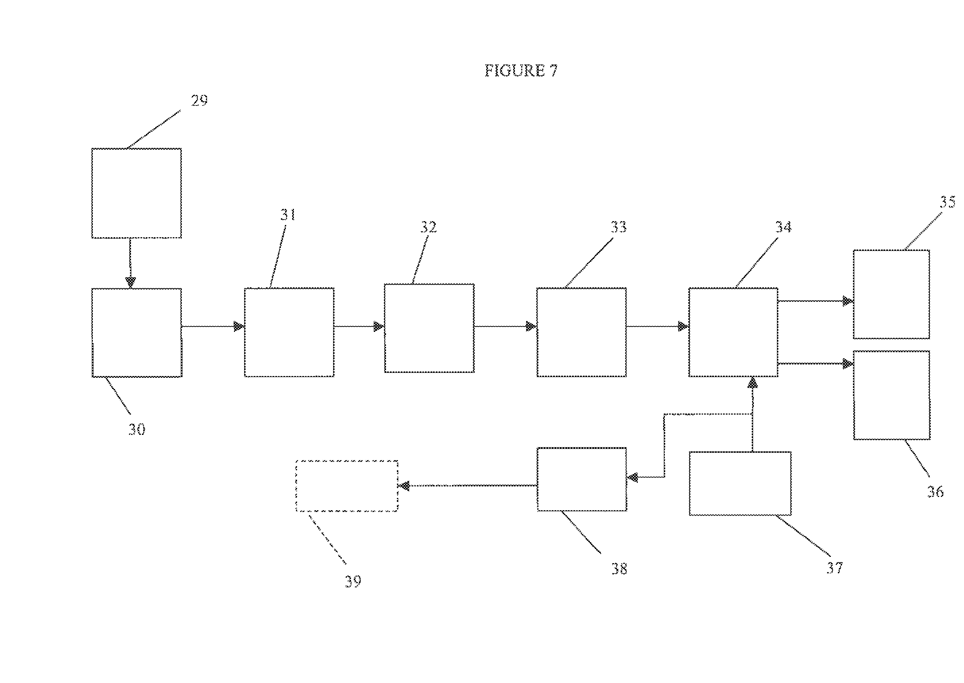

As shown in Fig. 7, the ground station 12 is provided with a UHF antenna 29, UHF transmission module 30, first and second ECEF compensators 31, 32, a power compensation and calibration module 33, comparator 34, display unit 35, network link module 36, Radio Access Network (RAN) transmission history data module 37 and RAN transmission control module 38 having a link to a TT&C station 39.

An embodiment of a monitoring method according to the present invention will now be described.

### Monitoring satellite scanning procedure

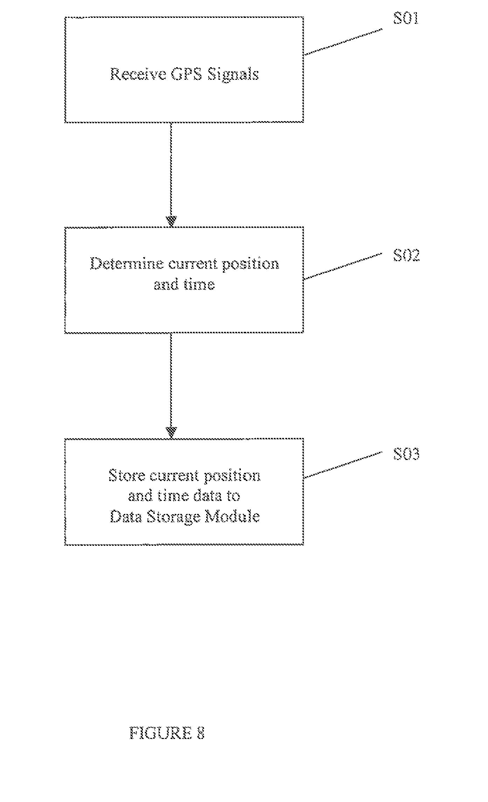

As the monitoring satellite 11 travels along its orbit 11a, its GPS receiver 15 constantly receives GPS signals from a constellation of GPS satellites (of which one, given reference numeral 40, is shown in Fig. 3). These GPS signals include information which allows the precise position of the monitoring satellite 11, as well as the current time, to be established. This information is constantly calculated by the GPS receiver 15 and continually recorded to the data storage module 21. This process is shown schematically in Fig. 8. At step S01, the GPS receiver receives the GPS signals. At step S02, the GPS receiver determines the current position of the monitoring satellite and the current time. At step S03, this positional and time information is stored to the data storage module 21.

Information relating to the attitude of the monitoring satellite 11 i.e. its absolute orientation in space, is also constantly generated and saved to the data storage module 21 by the magnetometer 15a.

In addition to receiving GPS signals, the monitoring satellite 11 also constantly scans for signals in the L-band using its L-band antenna 16. The communications satellite 2 transmits user traffic and signalling signals to users such as user terminal 5 in the L-band in its narrow spot beams 8. Accordingly, when the monitoring satellite 11 is located within one of those beams 8 (or within two or more beams, where they overlap), it detects any signals being transmitted to users in that beam (or the overlapping beams) as it scans through the L-band. The beam-width of the L-band antenna 16 is sufficiently narrow to allow accurate detection of a signal source (e.g. to allow for signals received when the monitoring satellite 11 is located within a beam of the communications satellite 2 to be reliably attributed to the communications satellite 2), but at the same time is still wide enough for all beams 8 of the communications satellite 2 to be monitored by the monitoring satellite 11 as it travels along its orbit 11a. In the present embodiment, the antenna 16 is a Broadband Global Area Network (BGAN) L-band antenna. The beam width of the L-band antenna 16 may be modified to account for any method used to stabilise the monitoring satellite 11, as will be later described. Signals received by the antenna 16 are passed to the pre-amp band-pass filter 16a, which is tuned to allow only signals of the frequencies of interest (in this case, within the 1-2 GHz L-band range) to pass to the low noise amplifier 17. This prevents the low noise amplifier 17 from being saturated with power from other signals outside the band of interest. The low noise amplifier amplifies the signals exiting the pre-amp band-pass filter 16a and passes them to the frequency scanning module 18.

The frequency downconversion module 24 of the frequency scanning module 18 (see Fig. 6) then performs a frequency downconversion process on the signals received from the low noise amplifier 17. In the present embodiment, this downconversion is achieved by a heterodyning process in which the L-band signals from the low noise amplifier 17, at frequency f, are mixed by mixer 27 with signals generated at frequency fg by the signal generator 26 to generate heterodynes at the frequencies f+f_{g} and f-f_{g}, the former being filtered out by the band pass filter 28. Additionally, the pass band of the band pass filter 28 means that only received signals diverging from the heterodyne f-f_{g} by less than or equal to a predetermined amount will pass through the band pass filter 28, downshifted by frequency fg. In the present embodiment, the pass band of the band pass filter 28 is set narrow enough such that where a plurality of L-band signals at differing respective frequencies are simultaneously received, only one of those signals will generally pass through the band pass filter 28 (after downconversion) for any given value of fg.

Frequency downconversion is preferred as it generally facilitates later processing of the signal. However downconversion may be avoided e.g. where other components of the system, and in particular the power meter 25, are able to process the signals at their original (L-band) frequency. This would advantageously allow the payload 14 to be simplified by omitting the frequency downconversion module 24. Further, although downconversion by heterodyning is described, any other suitable downconversion methods may be utilised where downconversion is to be employed.

Returning to the present embodiment, the power levels of the downconverted signals exiting the frequency downconversion module 24 are then measured using the power meter 25, and the measurements are stored in data storage module 21, together with an indication of the current time and monitoring satellite position from the GPS receiver 15.

The measurement accuracy of the power meter 25 will be determined by the needs of the end user, but an envisaged desirable accuracy (as presented to the end user after the ground station processing described hereinafter) would be +/- 0.5dB.

In the present embodiment, the control processor 20 causes the frequency scanning module 18 to continuously scan through and record power level information relating to signals received at frequencies throughout the entire L-band range. In the present embodiment, this is achieved by the control processor 20 periodically incrementing the frequency fg generated by the signal generator 26, and hence also incrementing the frequency required of a received L-band signal if it is to pass through the band-pass filter 18 (downshifted by frequency fg) for measurement by the power meter 25. The generated frequency fg is increased until it reaches a predetermined maximum frequency fₘₐₓ, at which only received signals at the top of the forward (i.e. transmission) L-band range utilised by the communications satellite 2, including the extended L-band range, will pass through the band pass filter 18 after downconversion. The scanning process is then repeated again, by setting the generated frequency fg to a predetermined minimum frequency fₘᵢₙ, at which only received signals at the bottom of the L-band range will pass through the band pass filter 18 after downconversion. The generated frequency fg is then incremented until fg reaches fₘₐₓ, as before. In this way, the frequency scanning module 18 of the present embodiment is caused to continuously scan through the entire L-band range.

At each frequency step the control processor 20 waits for a predetermined amount of time before further incrementing the frequency. Where the communications satellite 2 is known to transmit signals in bursts, for example under a Time Division Multiplex (TDM) scheme, then the control processor 20 is preferably arranged to wait for at least the duration of each burst, e.g. 80ms, before incrementing the generated frequency fg, to permit the power meter to make accurate power measurements at each frequency step. At each step, the control processor 20 records an indication of the value of the generated frequency fg in the data storage module 21, to permit the frequencies of received L-band signals being scanned by the frequency scanning module at any given point to be later established.

In the present embodiment, the above-described scanning process is repeated by the monitoring satellite 11 as it moves along its orbit 11 a and passes through coverage regions of all of the spot beams 8 generated by the communications satellite 2. Hence, monitoring information, comprising power measurements of received L-band signals, is obtained for all of the spot beams 8.

In the present embodiment, only one multi-beam satellite 2 is illustrated. However, the monitoring satellite 11 may perform the above-described scanning process for any and all beams of any further satellites desired to be monitored, simply by passing through those beams as it travels along its orbit 11a. Indeed, for the monitoring of the applicant's above-mentioned constellation of three Inmarsat-4™ satellites, it is envisaged that a single monitoring satellite could pass through (and hence monitor) all 576 (i.e. 3 x 192) spot beams provided by this constellation, by using an orbit having, for example, the following parameters:
Mean Motion: 0.0617138 deg/sec
Eccentricity: 0.001545
Inclination: 97.914 deg
Argument of Perigee: 343.369 deg
Right Ascension of Ascending Node: 105.598 deg
Mean anomaly: 16.6985 deg

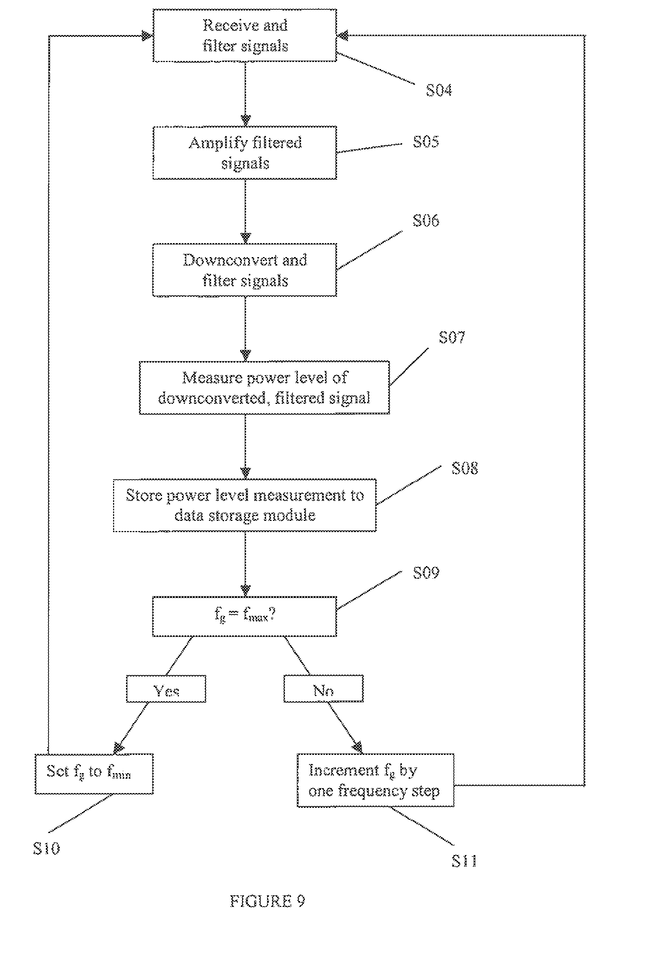

The above-described scanning process is illustrated schematically in Fig. 9. At Step S04, signals are received by the L-band antenna 16 and all but L-band signals are filtered out using the pre-amp band pass filter 16a. At Step S05, the filtered L-band signals are amplified by the low noise amplifier 17. At step S06, the amplified signals are downconverted by signal fg and are filtered using the band pass filter 18, and the value of fg is stored to the data storage module 21. At Step S07, the power level of the downconverted signal passing through the band pass filter 18 is measured by the power meter 25. At Step S08, the measured power level is stored to the data storage module 21. At Step S09, a determination is made as to whether fg equals the predetermined maximum frequency fₘₐₓ, which corresponds to scanning for signals at the top of the L-band range. If the determination is positive, the process proceeds to step S10, where fg is set to fₘᵢₙ, which corresponds to scanning for signals at the bottom of the L-band range. The process then reverts to Step S04. If the determination of step S09 is negative, then frequency fg is incremented by a predetermined value, which is 50kHz in the above-described embodiment. The process then reverts to Step S04.

At a position further along its orbit, the GPS receiver 15 determines that the monitoring satellite 11 has arrived at a location pre-determined as being within view and UHF transmission range of the ground station 12. Once the GPS receiver 15 has made this determination, all of the data stored in the data storage module 21 is passed to the UHF transmission module 22, which transmits the data to the ground station 12 as a UHF transmission 13, using the UHF antenna 23.

The ground station then acknowledges safe receipt of the data by sending a return UHF transmission, which is received by the monitoring satellite's UHF transmission module 22 using the UHF antenna 23. The UHF transmission module 22 then sends a signal to the data storage device 21, indicating that the information stored therein may be deleted to free up space on the data storage module 21. If a UHF transmission acknowledging safe receipt is not received by the UHF transmission module 22 within a predetermined time it is assumed that a problem has occurred in transmission. Accordingly, the stored information is not deleted, but is instead re-transmitted when the monitoring satellite is next within range of the ground station 12.

Having transmitted its monitoring information to the ground station 12, the monitoring satellite 11 then repeats the entire process by obtaining fresh monitoring information on the beams 8 of the communications satellite 2 as the monitoring satellite 11 continues along its orbit and again passes through those beams 8. The freshly-obtained monitoring information is then transmitted to the ground station 12 via a UHF transmission 13, and so on, such that the ground station 12 repeatedly receives updated monitoring information on the beams 8 for each orbit of the monitoring satellite 11.

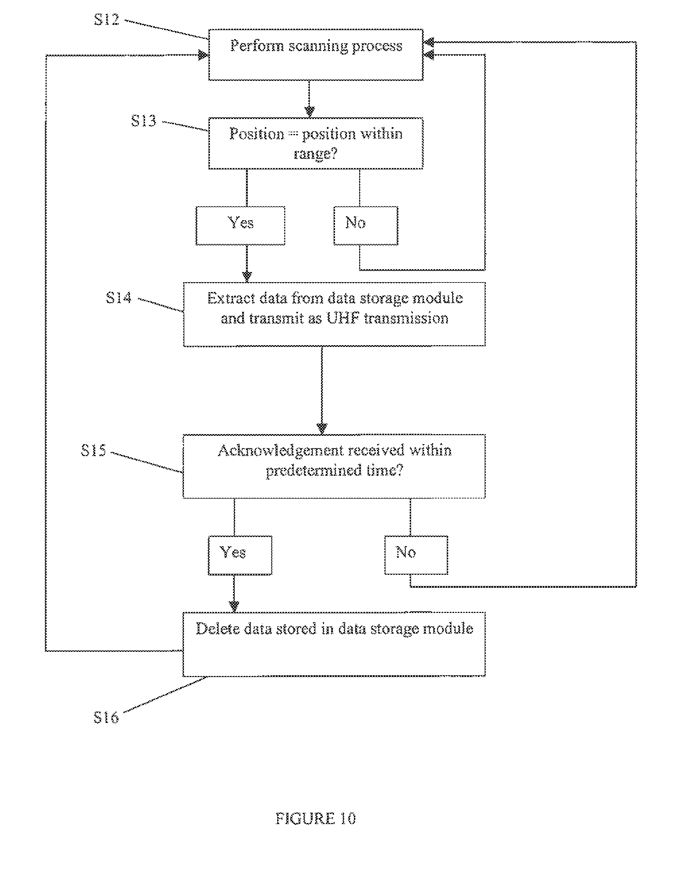

The above-described store and forward process is shown schematically in Fig. 10. At Step S12, the scanning process of Fig. 9 is conducted. At step S13, a determination is made as to whether the monitoring satellite is at a position predetermined as being within UHF range of the ground station 12. If the determination is negative, the process returns to Step S12. If the determination of Step 13 is positive, then the process proceeds to Step S14, whereupon the monitoring information stored in the data storage module is sent by the UHF transmission module 22 to the ground station 12 as a UHF transmission 13 using the UHF antenna 23. At Step S15 the UHF transmission module makes a determination as to whether an acknowledgement of safe receipt signal has been received from the ground station 12 by the UHF antenna 23. If the determination is positive, the process moves to Step S16, whereupon the UHF transmission module instructs the data storage module 21 to erase the data currently stored in the data storage module 21. The process then reverts to Step S12. If the determination of Step S15 is negative, then the process reverts directly to Step S12, and the data in the data storage module 21 is not deleted at that stage. To account for the possibility of a number of transmissions being unsuccessful, the data storage module 21 may for example be provided with sufficient capacity to store data obtained on three orbits before the data storage module runs out of capacity, and is forced to overwrite the stored information with newly-obtained beam status data. The data storage module 21 may however be provided with capacity allowing for storage of more or less orbits than three orbits.

### Ground station analysis

The UHF transmissions 13, containing beam monitoring information, sent by the monitoring satellite 11 are received by the ground station's UHF antenna 24, and the ground station's UHF transmission module 30 sends a return UHF signal via the UHF antenna 29 to the monitoring satellite 11 to confirm that the transmission 13 was successfully received by the ground station 12, as described above.

The monitoring information data received by the ground station 12 comprises the power levels of the downconverted signals measured by the power meter 25, the time and position information derived by the GPS receiver 15, the monitoring satellite attitude information from the magnetometer 15a and the value of the frequency fg employed at each scanning step.

This data is then processed by the ground station 12 by firstly performing Earth Centred, Earth Fixed (ECEF) compensation on the GPS position data using the compensators 31 and 32, which perform ECEF compensation accounting for the positions of the monitoring satellite 11 and communications satellite 2, respectively.

Next, the L-band signal power measurement data is attitude compensated and calibrated using the power compensation and calibration module 33.

As will be appreciated by the skilled person, the beam profile or pattern of the L-band antenna 16 of the monitoring satellite 11 may be such that the monitoring satellite 11 may be more sensitive to signals from the communications satellite when the beam of the L-band antenna is pointed directly at the communications satellite 2, and may be less sensitive when the L-band antenna is pointed away from the communications satellite 2 to some degree. Accordingly, the power compensation and calibration module 33 may be used to compensate the power measurements made by the monitoring satellite, based on the attitude information from the magnetometer 15a and details of the beam profile of the L-band antenna 16, to account for the attitude of the monitoring satellite 11 relative to the communications satellite 2 for each power measurement made. Details of the L-band antenna beam profile may for example be obtained by measuring the gain characteristics of the L-band antenna 16 at all angles before launch of the monitoring satellite 11.

The power compensation and calibration module 33 additionally calibrates the power measurements, by noting any deviation in the power levels of calibration signals measured over sequential orbits of the monitoring satellite and adjusting the remaining power measurements based on any noted deviation.

In more detail, and as noted previously, a calibration signal is continuously transmitted in each beam 8 of the communications satellite 2, at a known and constant power level and at a known frequency within the L-band range. The calibration signals are received and measured by the monitoring satellite 11, just as for any other L-band signal, as it passes through the beams 8 of the communications satellite 2. As the transmission frequency of the calibration signals are known, the power measurements made by the power meter 25 for the calibration signals may be readily identified by consideration of the generated frequency fg used at each monitoring step, which in turn determines the L-band frequency of the signal which will have been measured by the power meter 25 for that step. The power measurements for the calibration signals are then compared by the power calibration module 22 with measurements for the calibration signals made on one or more preceding orbits of the monitoring satellite. As the calibration signals are transmitted at a constant power level, the measured power levels of those signals can be expected to be the same over sequential orbits. However, if the measured power level of a calibration signal in a given beam diverges from the expected value (determined over one or more previous orbits), then the remaining power measurements made within that beam (i.e. the power measurements made for the communications signals transmitted by the communications satellite 2) on that particular orbit are adjusted accordingly. For example, if the measured power level of the calibration signal is below the expected level by a given amount, then the remaining power measurements are increased by that amount.

In addition or as an alternative to comparing measured calibration signal power levels over sequential orbits, the power levels of the calibration signals may be monitored over time by any land earth stations (LES) 4 within the beam or beams 8 being monitored. Any divergence in the measured level noted by the LES 4 may be used to calibrate power measurements made by the monitoring satellite 11 at the time that the divergence is noted.

Yet further, in addition or as an alternative to the above methods, power measurements may also be calibrated by comparing the power levels of calibration signals measured in adjacent beams 8. Wherever the measured level in one beam diverges from the remainder, then the communications signal power measurements made in that beam may be adjusted accordingly. In any event, wherever a calibration signal is not detected and measured by the monitoring satellite 11 within a given beam, or is detected but diverges from an expected value by more than a predetermined amount, an early indication of a possible malfunction of that beam may be identified.

Although power measurements are calibrated using a known calibration signal in the present embodiment, other suitable calibration methods may be used, which may for example allow for the power measurements to be calibrated without having the communications satellite 2 constantly transmit a calibration signal.

The attitude compensated and calibrated power measurement data is then input to the comparator module 34 for comparison with corresponding RAN transmission history data, which lists transmission time, frequency (both the C-band frequency used to transmit the signal from the LES 4 to the communications satellite 2 and the L-band frequency used for onward transmission by the communications satellite) and power level information for all communications signals, such as user traffic and signalling signals, which have been sent by the LES 4 to the communications satellite 2 for onward transmission. The RAN transmission history data is input to the comparator module 34 by the RAN transmission history module 35.

The comparator module 34 performs the comparison by firstly associating each power measurement made by the power meter 25 with a signal listed in the RAN transmission history, and then comparing the power level of the signal listed in the RAN history with the power level actually measured by the power meter 25, to confirm that the beams of the communications satellite 11 are operating correctly.

In more detail, the comparator module 34 identifies the position of the monitoring satellite 11 (as determined by the GPS receiver 15) at the time at which a given L-band signal was received, and accordingly determines the beam 8 in which the monitoring satellite 11 was located, and hence the beam 8 in which the signal was apparently transmitted, at that time. In the present embodiment, this determination is facilitated by the fact that the communications satellite 2 is a geostationary satellite in which each beam 8 is substantially stationary relative to the Earth's surface. However, this determination could still be made in the case of moving beams 8 by additionally considering the time at which each signal is received, together with details of the coverage area of the beams 8 at those times.

Returning to the present embodiment, the time at which the measured signal was received is noted based upon the time information from the GPS receiver 15, and the L-band frequency of the measured signal is determined by a consideration of the generated frequency fg which was employed at that time (and which in turn determines the frequency required of a received signal if it is to pass through the band pass filter 18 for measurement by the power meter 25). The comparator then identifies the signal in the RAN transmission history which corresponds to this time and frequency information so as to associate the measured signal with a signal in the RAN transmission history. Further, where a signal was located in a region covered by more than one beam 8, the comparator may consult the RAN transmission history for each of those beams to correctly associate the measured signal with a signal indicated in the RAN transmission history.

The comparator module 34 then compares the power level of the signal indicated in the RAN transmission history data with the calibrated power level actually measured by the power meter 25. Any difference between these power levels (i.e. the level expected from the RAN history and the actual measured level) may indicate a malfunctioning operational status of the beam 8 in question. In the event that no power measurements (other than for the calibration signal) were taken within a given beam or beams 8, the comparator module performs a check to confirm that no signals are listed in the RAN history for that beam or beams at that time. If the RAN history indicates that signals were sent to the communications satellite 2 for transmission in that beam or beams at the relevant time of measurement, then the operational status of the beam or beams 8 may be identified as malfunctioning.

Wherever the comparator module 34 is unable to identify a measured signal with a signal in the RAN history, then a source of potential interference may be identified, as described in greater detail hereinafter.

The comparator module 34 may also perform a reverse analysis, either as an alternative or in addition to the above, in which the RAN history is taken as the starting point for the comparison, and the monitoring data forwarded by the monitoring satellite 11 is consulted to confirm that, for the times at which the monitoring satellite 11 was within the beams being monitored, a corresponding signal was received by the monitoring satellite 11 and that its measured power level corresponds to the value expected from the RAN history data. The lack of any corresponding measured signal being identified in the monitoring information from the monitoring satellite 11 may indicate a malfunctioning operational status of the beam 8 in question. Further, where a corresponding signal is identified, but the measured power level differs from the value expected from the RAN history, a malfunctioning operational status of the beam 8 may be identified.

The results of the comparison performed by the comparator module 34, along with any other desired data e.g. the raw data obtained by the monitoring satellite 11 or the results of further analysis conducted on the raw data, such as the stored GPS signals processed to determine the orientation of the monitoring satellite 11 at any given time, is then displayed to a user at the ground station 12 using the display unit 35. Alternatively or additionally, a user at a location other than the ground station 12 may access the results of the comparison, and any other desired data, over a network (such as the internet) by means of the network link module 36. This may be particularly convenient where the ground station 12 is at a remote or inaccessible location. Additionally, use of such network link modules 36 may allow for a user at a single location to review data obtained by a plurality of geographically dispersed ground stations 12. Hence, whether on-site at the ground station 12 or remotely, the user may review the results of the data processed by the ground station 12 to confirm that all of the spot beams 8 of the communications satellite 2 are operating as expected.

In the present embodiment, the monitoring information obtained by the monitoring satellite 11 is analysed by comparing the power level of received signals with expected power level values from the RAN transmission history data. However, the monitoring information may be analysed in a number of other ways. For example, the data may be analysed to determine whether any signals listed in the RAN transmission history data were indeed received by the monitoring satellite 11. Further, as the monitoring satellite 11 is arranged to scan through a range of frequencies, a spectrum analysis may be performed, for example, indicating the various frequencies at which signals were received. As will be appreciated, analysing the data in ways such as these allows for the beams of the communications satellite to be monitored using the monitoring satellite 11. In particular, the operational status of the beams may be monitored e.g. to determine that a given beam is operating as expected, is operating as expected only for signals at certain frequencies but no others, is not operating within acceptable parameters, etc.

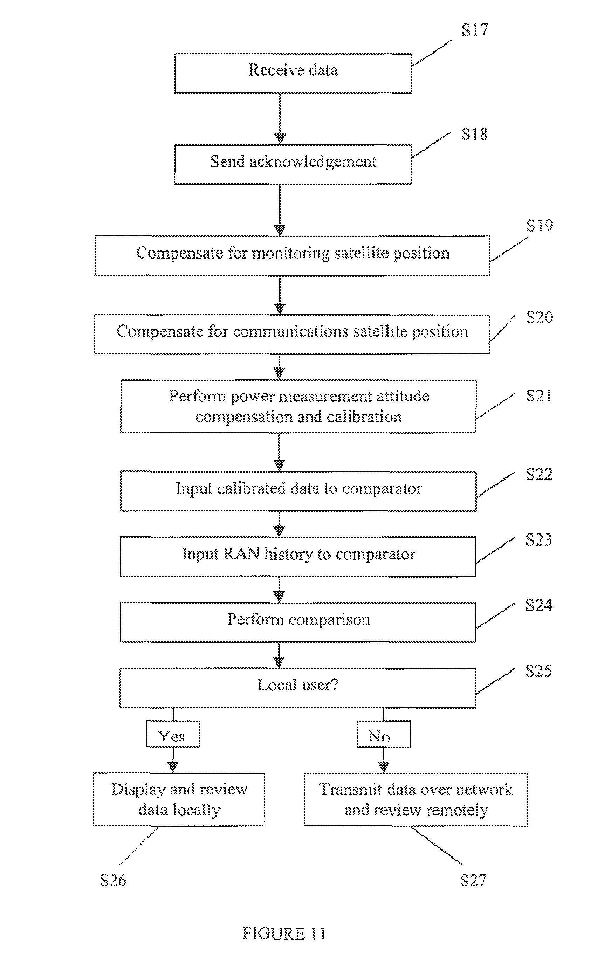

The above described processing and analysis steps are shown schematically in Fig. 11. At Step S 17, data is received from the monitoring satellite 11 at the ground station 12. At Step S18, UHF transmission module 30 sends an acknowledgement to the monitoring satellite. At Step S 19, ECEF compensation is performed on the positional data to account for the position of the monitoring satellite 11 during each signal scan. At Step S20, ECEF compensation is performed on the positional data to account for the position of the communications satellite 2 during each signal scan. At Step S21, power measurement attitude compensation and calibration is performed. At Step S22, the attitude compensated and calibrated power information is input to the comparator 34. At Step S23, RAN transmission history data is input to the comparator 34. At Step S24, the comparator performs a comparison of the data input thereto. At Step S25, a determination is made as to whether local display has been requested. If the determination is positive, the process moves to Step S26, and the data is displayed and reviewed by a user locally using the display unit 35. If the determination of Step S25 is negative, the data is transferred by the network link unit 36 and reviewed by a user at a remote user terminal at Step S27.

### Beam Maintenance

If a problem is identified with any of the spot beams 8 as a result of the analysis of the monitoring information, maintenance and/or corrective information data may be input to the RAN transmission control module 38. This data is then forwarded to the tracking and control (TT&C) station 39 which performs any necessary maintenance or corrective activity, for example by adjusting the beam pattern of the communications satellite 2. The TT&C station 39 may or may not be collocated with the LES 4 and/or the ground station 12.

Conveniently, in the present embodiment the efficacy of any maintenance or corrective actions taken by the TT&C station 39 may be readily established by the monitoring satellite 11, as on its next orbit 11a the monitoring satellite 11 will again obtain monitoring information on the beam or beams 8 affected by the maintenance or corrective action thus enabling the operational status of those beams 8 to be re-assessed. Hence, a "closed loop" feedback process is provided, enabling the ability to adjust spot beam power/frequency etc. in the Radio Access Network and close the loop (i.e. feed back information on the efficacy of those adjustments), in real time, by use of the monitoring satellite 11.

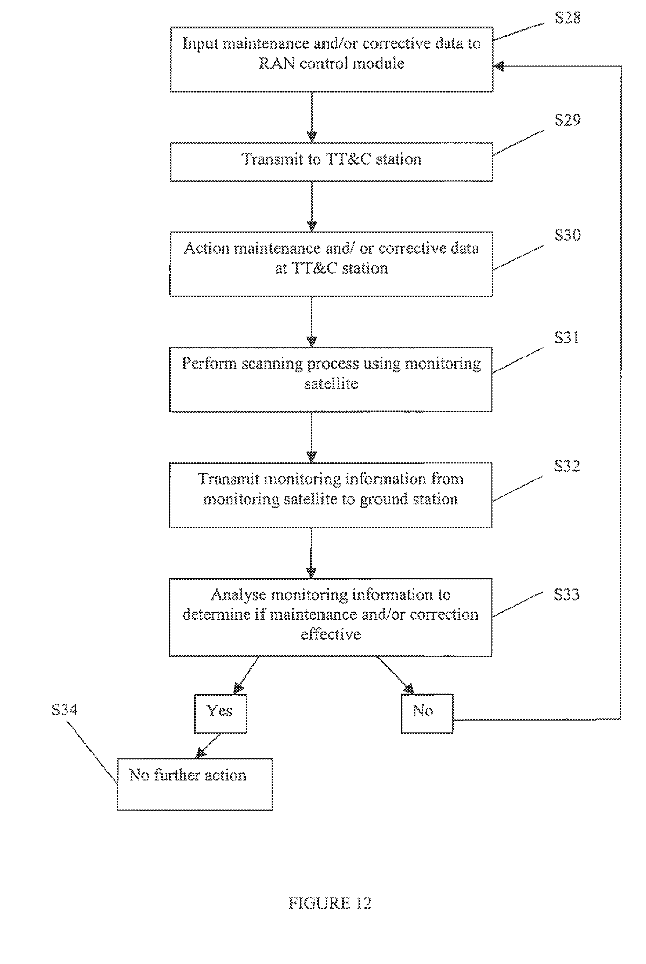

This closed loop feedback process is illustrated in Fig. 12. At Step S28, corrective and/or maintenance data is input to the RAN control module 38. At Step S29, the corrective and/or maintenance data is transmitted to the TT&C station 39. At Step S30, the TT&C data performs the necessary corrective and/or maintenance operation by communicating with the communications satellite 2. At Step S31, the monitoring satellite 11 performs the store and forward process of Fig. 10. At Step S33, the monitoring information obtained by the monitoring satellite 11 is analysed using the process of Fig. 11 to determine the operational status of the beams and hence the efficacy of the corrective and/or maintenance operation conducted by the TT&C station 39. If the determination is that the corrective and/or maintenance operation was effective, then the process terminates at step S34. If the determination is that the corrective and/or maintenance operation was not effective, then the process returns to step S28, whereupon additional corrective and/or maintenance data is input to the RAN control module 38, and the above-described process is repeated.

### Interference monitoring and third party transmissions

As described above, wherever the comparator module 34 is unable to identify a measured signal with a signal in the RAN history, then a source of potential interference may be identified. This source could for example be another beam of the communications satellite, or may for example be a third party source.

In more detail, and as mentioned above, the same frequency channels may be used by the communications satellite 2 for beams 8 which are separated by at least a minimum separation distance. Use of this separation distance is intended to reduce interference between beams to an acceptable level, or to prevent such interference altogether. The monitoring satellite 11 may be used to ensure that the interference between beams is minimised or prevented as desired. Specifically, if the monitoring satellite 11 is located within a given beam 8, and detects a signal within a frequency channel used by that beam, but the comparator module 34 is unable to identify that signal with a signal in the RAN history for that beam 8, then the comparator module 34 may then seek to identify that signal with signals in the RAN history for other beams 8 of the communications satellite 2 which use that frequency channel. If an identification can be made, then interference between the beams is identified. If the interference is at an unacceptable level, then appropriate remedial action may be taken by transmitting suitable maintenance and/or corrective information to the TT&C station 39 using the RAN transmission control module 38, as before.

Further, where a measured signal cannot be identified with any beam or beams of the communications satellite 2, then that signal may instead potentially be identified as originating from a third-party satellite also transmitting signals in that range. Yet further, any signals identified by the monitoring satellite 11 when it is not located within a beam 8 of the known communications satellite 2 may potentially be attributed to a third party communications satellite transmitting signals at a frequency or frequencies being monitored. As they use the same frequency or frequencies, any such third party satellites give rise to the potential for interference with the known communications satellite 2. Accordingly, the monitoring satellite 11 may be used to monitor other satellites using the same frequency or frequencies. Accordingly, potential interferers may be tracked and identified, and appropriate action may be taken to prevent interference events from occurring.

As will be appreciated, according to the above-described first embodiment the monitoring satellite 11 is used to monitor the actual beam or beams 8 used to transmit signals from the communications satellite 2 to an intended recipient. It should however be noted that the monitoring satellite 11 is an entirely passive device, and does not substantially interfere with the beams 8 nor the signals transmitted therein. Hence, the transmissions from the communications satellite 2 are received by an intended recipient (e.g. user terminal 5) as normal, unaffected by the monitoring process conducted by the monitoring satellite 11.

### Second embodiment

The above describes a method by which the transmission operational status of each spot beam 8 may be monitored using a monitoring satellite 11. The following describes a method according to a second embodiment of the present invention, by which the reception operational status of a beam or beams of a satellite may be monitored using a monitoring satellite.

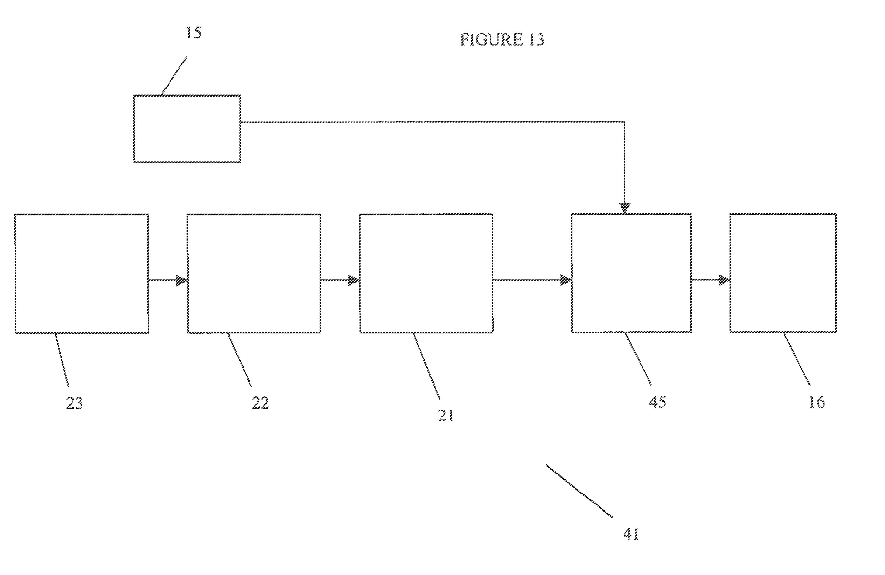

To perform the method of the second embodiment, the payload of the monitoring satellite 11 of the first embodiment is replaced with the payload 41 shown in Fig. 13. Other aspects of the monitoring satellite 11, and indeed all other apparatus aspects, including the communications satellite 2 and ground station 12 are otherwise the same as in the first embodiment, and hence will not be re-described here and like parts will be given the same reference numerals.

The payload 41 comprises a UHF antenna 23, UHF transmission module 22, data storage module 21, L-band transmission module 45, L-band antenna 16 and GPS receiver 15.

As in the first embodiment, the monitoring satellite 11 passes within UHF range of the ground station 12 as it travels on its orbit. The ground station constantly transmits current beam frequency allocation data as a UHF transmission, and accordingly this data is received by the monitoring satellite using its UHF antenna 23 once it passes within UHF transmission range. The UHF transmission module 22 then stores this data into the data storage module 21. The beam frequency allocation data details the frequencies currently used for reception by the beam or beams 8 of the communications satellite 2.

As the monitoring satellite 11 continues on its orbit, it enters a beam 8 of the communications satellite. Using GPS signals from GPS satellites 40, the GPS receiver 15 identifies that the monitoring satellite 11 has entered the beam 8 and sends a signal to the L-band transmission module 41. The L-band transmission module 41 then consults the current beam frequency allocation data to determine a current reception frequency used by the beam 8, generates a test signal at that frequency and transmits the test signal to the communications satellite 2 within the beam 8 at a predetermined power level using the L-band antenna 16.

Accordingly, provided that the beam 8 being tested is at least functional, the communications satellite 2 will receive the test signal and transmit the test signal to the LES 4 over the bidirectional feeder link 10. The test signal may then be analysed at the LES 4 or other location. In particular, as the test signal is transmitted at a known power level by the monitoring satellite 11, a determination may be made as to whether the signal is received by the LES 4 at a corresponding power level, which determination may be used to identify whether the beam 8 under test is operating as expected. Further, the absence of a test signal being received by the LES 4 may be interpreted as a potential indication of problems associated with the reception operational status of the beam 8 under test. Hence, according to this method, the reception operational status of the beam or beams 8 of a communications satellite 2 may be monitored.

The test signals generated by the L-band transmission module 45 may for example comprise simple unmodulated carrier waves, or modulated signals resembling a signal from a user terminal, such as QPSK digitally modulated signals.

The L-band transmission module 45 may include an indication of the current position of the monitoring satellite 11 (determined by the GPS receiver 15) in the test signals which it sends to the communications satellite 2. For example, the L-band transmission module may be arranged to modulate a simple sinusoidal carrier wave test signal with digital positional data, to reflect the position of the monitoring satellite 11 at the time of sending of the test signal. This is of particular benefit where a plurality of beams 8 is to be tested, as a test signal received at the LES 4 may then be analysed to establish the position at which the test signal was sent, which potentially simplifies the process of identifying the beam 8 on which the test signal was received. The monitoring satellite 11 may also include an indication of the current time in each test signal sent, to aid this determination.

Alternatively, the frequency at which the test signal is sent may be unique to each beam. The beam on which a given test signal was received may then potentially be identified, simply by determining the frequency of the received test signal.

Wherever the reception operational status of a beam or beams 8 is not as required, maintenance and/or corrective data may be transmitted to the communications satellite 2 using the TT&C station 39, and the efficacy thereof established by a closed feedback loop as in the first embodiment, by using the monitoring satellite 11 to monitor the beam or beams after the corrective action has been taken.

As will be appreciated, as the beam frequency allocation data is transmitted to the monitoring satellite 11 by the ground station 12, it is possible to update the monitoring satellite of changes to this data each time it passes the ground station 12. Hence, it is possible to ensure that the monitoring satellite 11 always transmits a test signal at a suitable frequency for reception by the communications satellite 2, even where suitable frequencies change over time.

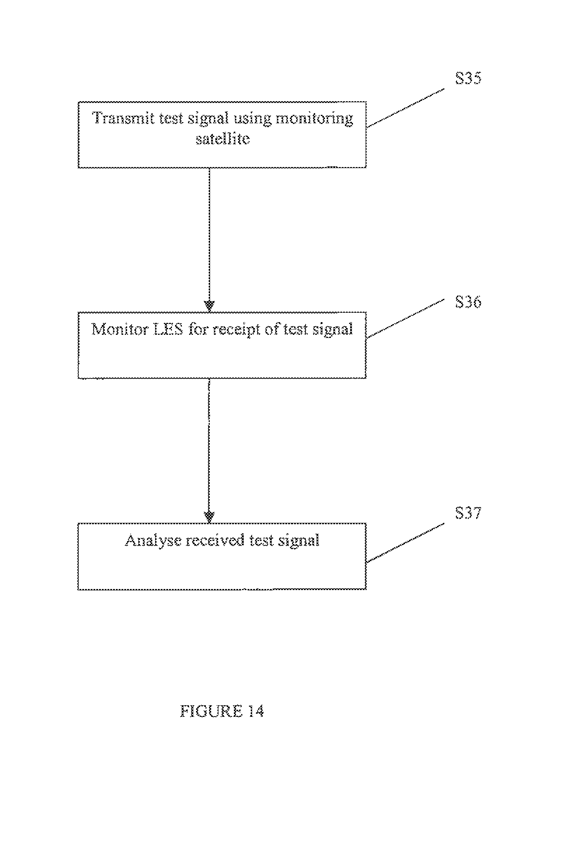

A method in accordance with the second embodiment is shown schematically in Fig 14. At Step S35, a test signal is transmitted to a communications satellite using the monitoring satellite 11. At Step S36, the receptions of the LES 4 are monitored for receipt of any test signals. At Step S37, any received test signals are analysed, for example to determine the beam on which they were received, and/or to determine power levels or other properties of the received test signals. Hence, the beam or beams of the communications satellite, and in particular the operational status thereof, may be monitored.

In the above described second embodiment, the L-band transmission module 45 generates the test signals sent to the communications satellite 2. In an alternative embodiment, a suitable test signal is transmitted to the monitoring satellite 11 as a UHF transmission from the ground station 12. Then, the L-band transmission module 45 need only extract the test signal from the data storage module 21 and transmit this signal at an appropriate time to monitor the receive status of a beam. The test signal is preferably provided at a predetermined frequency known to be currently used for reception for the beam or beams 8 to be tested. In this way, it becomes unnecessary to transmit current beam allocation data to the monitoring satellite 11, as the test signal is already at an appropriate frequency for transmission. Where a number of beams 8 are to be tested, the monitoring satellite may be provided with one test signal for each beam 8 to be tested, to ensure that the test signals are at an appropriate frequency. Further, as the test signals are transmitted to the monitoring satellite 11 by the ground station, it is possible to test the reception operational status of the beam or beams of the communications satellite using different test signals on sequential orbits of the monitoring satellite. For example, in a first orbit, a simple unmodulated sinusoidal carrier wave could be used as the test signal. Thereafter, in a subsequent orbit of the monitoring satellite 11, the receive status of the beam or beams could be tested using a QPSK digitally modulated signal, resembling a signal from a user terminal.

### Orbit selection and monitoring satellite stabilisation

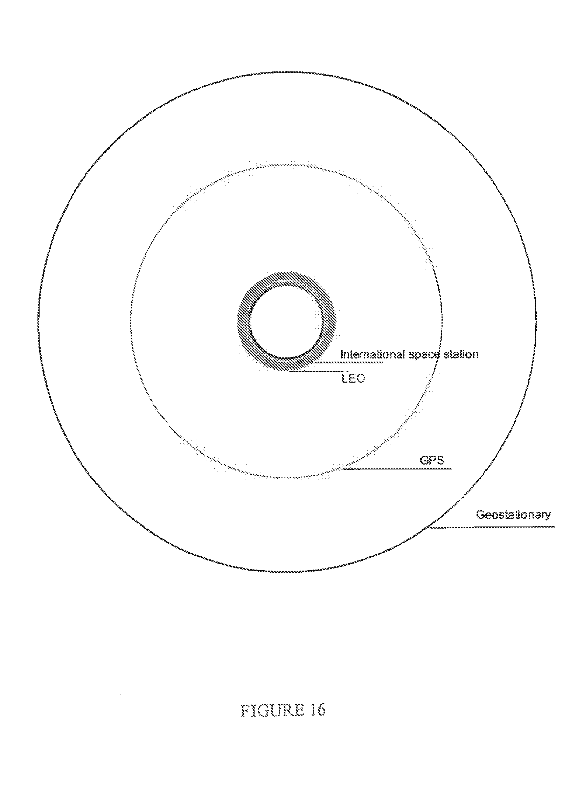

In the above described first and second embodiments, the monitoring satellite 11 travels in a lower orbit than the communications satellite 2. More specifically, the monitoring satellite 11 travels in a LEO 11 a, whereas the communications satellite 2 is in a geostationary orbit 2a, which at approximately 36,000 km (approximately 22,000 mi) above the equator is significantly higher than a LEO (typically up to 2,000km altitude), as shown schematically by Figure 16. This is advantageous as the beam regions encountered by the monitoring satellite 11 are relatively large - the monitoring satellite 11 is relatively close to the base of the conceptual "cones" presented by the beams 8 illustrated in Fig. 3 - and hence the monitoring satellite 11 has a relatively long time to scan through the entire L-band range (in the first embodiment) and to transmit test signals (in the second embodiment) whilst it is within each beam 8. Further, as the monitoring satellite 11 is relatively close to ground and relatively far from the multi-beam satellite 2, the monitoring satellite 11 does not cast any appreciable radio transmission "shadow" and hence does not interfere with transmissions sent from the communications satellite 2 to an intended recipient e.g. user terminal 5. Further, the monitoring satellite 11 may spend a significant proportion of its time travelling through and hence obtaining monitoring information relating to the beams 8, and less time out of the beams 8. Further, the relatively low altitude of the monitoring satellite 11 means that it travels fast relative to a given ground location, and in particular relative to the location of the ground station 12. Accordingly, the monitoring satellite 11 can frequently perform the "store and forward" process of the first embodiment, and accordingly a user may receive frequent updates on the status of the beam or beams 8 of the communications satellite 2 being monitored.

However, the monitoring satellite 11 can travel at other orbit altitudes closer to the altitude of the orbit of the communications satellite 2, and may for example travel in a near geostationary or near geosynchronous orbit, or in a Mid/Medium Earth Orbit (MEO) i.e. above the altitude of a LEO but below the altitude of a geostationary orbit. Such orbits may for instance be desired where a multibeam communications satellite is to be monitored, as at higher altitudes the monitoring satellite 11 will then have less distance to travel to cover all of the beams 8. Further, the signals received by the monitoring satellite 11 from the communications satellite 2 may be more powerful, and accordingly the amplification required of the low noise amplifier 17 may be lesser and may even allow for the low noise amplifier 17 to be omitted altogether, thus simplifying the design of the payload 14. However, where the altitude of the monitoring satellite 11 approaches that of the communications satellite 2, consideration should be given to ensure that the monitoring satellite 11 does not create an appreciable radio "shadow" perceivable by intended recipients of transmissions from the communications satellite 2 and/or perceivable by the communications satellite 2 as it receives transmissions from users.

In the above-described first and second embodiments, both the monitoring satellite 11 and the communications satellite 2 travel in circular orbits i.e. at substantially constant altitude. However, this does not have to be the case, and other orbits, such as elliptical orbits may be used, wherein the altitude varies, whether for the monitoring satellite 11, the communications satellite 2, or both. Potentially, therefore, the monitoring satellite 11 may orbit at an altitude lower than the communications satellite when it passes through a beam or beams 8 of the communications satellite 2, but may travel at an altitude equal to or higher than the altitude of the communications satellite 2 at another point along its orbit.

In the first and second embodiments the beam or beams being monitored are directed at the body around which the satellite being monitored orbits (the Earth in these embodiments). According to these embodiments, the orbit of the monitoring satellite 11 is such that the monitoring satellite 11 at least partially intercepts the beam by passing between a point on the surface of the body and the satellite being monitored.

Further, the orbit 11a of the monitoring satellite 11 of the first and second embodiments is selected to enable it to travel through and hence monitor all beams desired within an acceptable time period. For example, the monitoring satellite may be used to monitor the beam or beams at least once within a twenty four hour period. The L-band antenna 16, as well as the further components of the payload 14 of the monitoring satellite 11 may all be adjusted to facilitate selection of a suitable orbit.

Additionally, a variety of monitoring satellite stabilisation methods e.g. no stabilisation, geo-centric stabilised and communications satellite stabilised, may be selected to facilitate orbit selection. Factors which may affect the selection of the stabilisation method may include the attitude and orbit control systems that are available for the monitoring satellite 11; the availability for the monitoring satellite 11 of Altitude and Orbit Control Systems (AOCS) communication through UHF path to (and also from) ground; whether ECEF positional data, including payload direction, is available for the monitoring satellite 11; the expected accuracy of reporting to the ground station 12 by the monitoring satellite 11; and the ability of the monitoring satellite 11 to monitor the spot beams 8, based on its L-band antenna directivity. Where no stabilisation is employed, a reliance is placed on the random spin of the monitoring satellite, and hence its payload 14, to result in the L-band antenna 16 being oriented so as to be directed towards the communications satellite 2 frequently enough and for sufficient time periods so as to be able to provide sufficient monitoring of the beam or beams 8 of the communications satellite 2. An advantage of this approach is that no extra stabilisation components are required. As a result, the mass, cost and complexity of the monitoring satellite may be minimised. Further, reduced complexity potentially yields increased reliability and reduced operational risks - where no stabilisation system is provided, any potential operational errors associated with such a system are avoided altogether. However, the L-band antenna 16 of an unstabilised monitoring satellite 11 may often not be pointed towards the satellite 2 which it is intended to monitor, thus reducing the monitoring satellite's ability to monitor beam or beams of the communications satellite 2. To compensate, the beam-width of the L-band antenna 16 of an unstabilised monitoring satellite 11 may be increased, so as to increase the frequency and duration with which the beam of the L-band antenna 16 and the beam or beams 8 of the communications satellite 2 are sufficiently aligned to permit monitoring thereof.

In the case of geo-centric stabilisation, payload AOCS are provided to keep the payload 14 pointed at the centre of the earth. Although this will necessarily result in more power usage than no stabilisation, geo-centric stabilisation is the default system for most nano-satellite missions and hence the payload AOCS power consumption may be tolerable according to embodiments.

In the case of communications satellite stabilisation, payload AOCS are provided to keep the payload 14 pointed at the communications satellite(s) 2 being monitored. In polar regions, this method may potentially provide superior coverage as compared to geo-centric stabilisation. Further, a narrower L-beam antenna 16 beam width may potentially be used, potentially increasing the monitoring satellite's 11 ability to resolve the source of any given received signal. However, controlling the AOCS, especially in transit and overlap between communications satellites 2, may be more complex and may potentially result in higher power consumption, which could limit the lifespan of the monitoring satellite 11.

### Further preferred embodiments

The above-described embodiments are non-limiting and may be modified in various ways within the scope of the claims. The following describes a non-exhaustive selection of possible variations which may for example be made within the scope of the claims.

The first and second embodiments describe the monitoring of a communications satellite 2, However, the present invention may be applied to the monitoring of at least one beam of other types of satellites. For example, embodiments of the invention may potentially be used to monitor a beam or beams of a space station or space shuttle in orbit around a body such as the Earth. The second embodiment may for example be applied to the monitoring of a beam of a remote sensing satellite.

The first and second embodiments have been described separately, but may be performed by a single monitoring satellite 11 having a payload combining all of the necessary components of the payloads of the first and second embodiments 14, 41; duplication of common components (e.g. L-band antenna 16, data storage module 21 etc.) may be avoided by arranging a single example of each common component to conduct the methods of both the first and second embodiments, to simplify the combined payload. Indeed, a monitoring satellite 11 may alternately or simultaneously perform the methods of each embodiment when located in a given beam, so as to test both the transmission and reception operational status of the spot beams 8 encountered during a single orbit.

The monitoring satellite according to the first and second embodiments above utilises a GPS receiver in its payload. However, this need not be the case, and according to other embodiments the GPS receiver 15 may be omitted from the monitoring satellite payload, thus reducing the complexity, and potentially increasing the reliability, of the payload 14 of the monitoring satellite 11.

For example, in the first embodiment, rather than using GPS positional information derived by a GPS receiver, an operator may instead establish the ECEF position of the monitoring satellite 11 at the point at which a given L-band signal is received though sufficiently precise knowledge of the orbit 11 a of the monitoring satellite 11. Further, rather than using a GPS receiver to derive time information, the time at which a signal is received may be established by incorporating a clock into the payload 14, which may record time information to the data storage module 21 to "timestamp" each received L-band signal. Using this position and time information, the beam 8 in which a given signal was transmitted may then be identified, as in the first embodiment, and accordingly the GPS receiver 15 may be omitted from the payload 14. In such an arrangement, the clock could be arranged to periodically receive time update information from e.g. the ground station 12, and to update itself based on this information as necessary, so as to increase its accuracy. However, a small amount of inaccuracy in the time readings of the clock might be acceptable if the monitoring satellite 11 spends a sufficiently large time travelling through each beam 8, such that the identity of any one beam 8 may be resolved even given any such inaccuracy.

Furthermore, in the above-described first embodiment, a GPS receiver 15 is used to determine that the monitoring satellite 11 has reached a position within UHF range of the ground station 12, at which point the content of the data storage module 21 may be transmitted to the ground station 12. However, other means may be used. For example, the ground station 12 may constantly transmit a UHF ranging signal using its UHF antenna 29. When the UHF antenna 23 of the monitoring satellite 11 receives this ranging signal, the UHF transmission module 22 of the monitoring satellite 11 determines that the ground station 12 is within UHF range and accordingly causes the content of the data storage module 21 to be transmitted to the ground station 12.

Yet further, the second embodiment is described as utilising a GPS receiver 15 to determine that the monitoring satellite 11 is located within a beam to be tested before it transmits the test signal. However, in alternative embodiments, the monitoring satellite 11 may simply transmit the test signal constantly, allowing for the GPS receiver 15 to be omitted.

As a further alternative embodiment to the second embodiment, the communications satellite 2 may constantly transmit a ranging signal (e.g. in the L-band) in its beam or beams. The monitoring satellite 11 may then scan for these signals, and on receiving one such signal, may transmit its test signal. Such an arrangement would permit the GPS receiver 15 to be omitted. In particular, where a multibeam communications satellite 2 is to be monitored, the ranging signal for each beam 8 may be unique to that beam 8. In such an arrangement, the monitoring satellite may modify the test signal to include an indication of the unique ranging signal, before transmitting the test signal to the communications satellite 2. The test signal thus received may then be analysed to identify the unique ranging signal. Advantageously, the unique ranging signal sent in each beam 8 may include an indication of a frequency on which the test signal should be sent. The monitoring satellite 11 may then simply transmit the test signal at the indicated frequency. Accordingly, it may then be unnecessary for the monitoring satellite to store current beam frequency allocation data.

In further embodiments, a GPS receiver may be used, but the processing required of that GPS receiver may be reduced. For example, in the first embodiment described above, the GPS receiver 15 constantly calculates and stores the time and the position of the monitoring satellite 11 to the data storage module. In a variation of this embodiment, the GPS receiver 15 does not itself calculate this information, but instead simply stores and forwards information to the ground station 12, from which the time and position of the monitoring satellite may later be derived. For example, the GPS receiver 15 may simply be used to calculate, store and forward to the ground station 12 an indication of the time taken for GPS signals to travel from a plurality of GPS satellites to the monitoring satellite 11. As will be appreciated by the skilled person, this information enables the position of the monitoring satellite 11 to be later established at the ground station 12. In a further simplification, the GPS receiver may simply store and forward samples of the GPS signals themselves. As will be appreciated, by limiting the amount of processing required to be done by the GPS receiver 15, its power consumption may be reduced and its reliability potentially increased.

In the first embodiment described above, the frequency scanning module 18 scans through the L-band in 50 kHz steps, but other steps, larger or smaller, may be used e.g. 3 kHz or 200 kHz. Where smaller steps are used, a more detailed picture of the operational status of the beam or beams 8 may be built up, which may be particularly useful where a communications satellite 2 transmits a large number of signals in a given beam 8 separated by only small differences in frequency.

In the first embodiment described above, the beams 8 are monitored by using the monitoring satellite 11 to scan through the L-band frequency range to detect any user traffic signals being transmitted by the communications satellite 2 to intended recipients (such as user terminal 5) whilst the monitoring satellite 11 is within those beams 8. This has various potential benefits. For example, it is possible to test the operational status of a beam throughout the entire range in which frequencies are transmitted in that beam (the L-band in the first embodiment), as the communications satellite 2 may transmit different communications signals at different frequencies throughout the range. Further, the signals being transmitted to the intended recipients may be modulated signals, which allows the ability of the beam to transmit such modulated signals (rather than e.g. a simple sine wave signal) to be monitored. Further, interference which might occur between two or more beams using the same transmission frequencies may be monitored. However, the operational status of the beam 8 does not have to be assessed using user traffic. For example, the operational status of the beam 8 of the communications satellite 2 may be assessed simply by detecting and/or measuring properties of a test signal transmitted in the beam. For example, in a variation of the first embodiment, the LES 4 constantly transmits a test signal in the form of a digitally modulated signal, such as a QPSK modulated signal, resembling a signal intended for a user terminal, at a known frequency and power level to the communications satellite 2, for transmission in a known channel in each beam 8 of the communications satellite 2. The monitoring satellite 11 need then only scan for that known signal when it travels through the beams 8, and hence the need to scan through the entire L-band range may be avoided. This approach has several potential benefits.

Firstly, the scanning process conducted by the monitoring satellite 11 is greatly simplified, as it need only monitor for signals at the known frequency, rather than scanning through a range of frequencies. Accordingly, the payload of the monitoring satellite 11 might potentially be simplified.

Secondly, transmitting a test signal would potentially maximise beam monitoring. Specifically, in the first described embodiment, a situation could arise (at least theoretically) in which a monitoring satellite 11 happens to pass through a beam at a time when the LES 4 has not requested any signals to be transmitted in that beam 8. Given the large number of users for each beam 8, such a situation is highly unlikely, but if it were to arise the transmission status of the beam 8 could not then be determined until the next orbit of the monitoring satellite 11. This situation may potentially be avoided by constantly transmitting test signals, as the monitoring satellite 11 may then be used to test the transmission status of each beam 8 for each orbit it makes, regardless of whether any other signals are being transmitted in the beams 8.

A third potential benefit is that the power level of the test signal transmitted by the LES 4 is known. This potentially simplifies the processing and analysis of the information obtained by the monitoring satellite 11, as the power level measurements made by the monitoring satellite 11 only need to be compared with the known value, rather than with RAN transmission history data. Calibration of the power measurements might also potentially be simplified.

In a further variation of the first embodiment, the LES 4 may constantly transmit test signals, comprising digitally modulated signals resembling a signal intended for a user terminal, at a plurality of different frequencies for transmission in each beam of the communications satellite 2. The monitoring satellite 11 may then be used to monitor the operational status of the beam at these different frequencies. As a further alternative, a single modulated test signal may be used, but which continually increments through a range of frequencies (e.g. the L-band) to enable the operational status of the beam 8 to be monitored at a range of frequencies. In yet further alternatives, the test signal or signals may be simple unmodulated signals, rather than modulated signals.

In the first embodiment, the monitoring satellite 11 is arranged to monitor for signals transmitted in the L-band frequency range, as the communications satellite 2 transmits communications signals in this range. However, the monitoring satellite 11 may instead be arranged to monitor for signals transmitted at any desired frequency e.g. in the VHF (30 to 300 MHz), UHF (0.3 to 3 GHz), S (2 to 4 GHz), K (18 to 27 GHz), Ku (12 to 18 GHz), Ka (26.5 GHz to 40 GHz) or C-bands (4 to 8 GHz), either in addition or as an alternative to monitoring for signals transmitted in the L-band, especially where a monitored satellite 2 is known to transmit signals in a band other than the L-band.

Further, although the above first embodiment provides for monitoring by way of signal spectrum analysis and power measurement, the monitoring satellite 11 may be adapted as necessary to monitor other aspects of a satellite beam or beams, or to monitor these aspects in other ways.

For example, in a variation on the first embodiment, instead of constantly scanning through the L-band, a single sample of all L-band signals received at a given time may be taken by the monitoring satellite 11, and a fixed frequency down-conversion applied to all of those signals. A fast-Fourier transform (FFT) may then be applied to the downconverted signals using a digital signal processor incorporated into the monitoring satellite payload 14, to produce a spectrum analysis identifying all of the component frequencies i.e. identifying the frequencies of all of the signals transmitted by the communications satellite 2 which were captured by the single sample. The power levels of the component frequencies may according to embodiments also be derived by the digital signal processor. This information (i.e. frequency and/or power level information) may then be transmitted to the ground station via UHF transmission. Alternately, the sample itself may be transmitted to the ground station 12 for FFT processing at the ground station 12 or other location.

In a further variation of the first embodiment, a signal demodulation module is incorporated into the payload of the monitoring satellite 11, which is arranged to demodulate received L-band signals and to determine whether aspects of the modulating (baseband) signal are as expected e.g. to confirm that the bit error rate or general content of the baseband signal is as expected. The monitoring satellite 11 then simply transmits an indication of the result of this determination to the ground station 12 via UHF transmission. Alternatively, the monitoring satellite 11 may simply store and forward samples of received L-band signals to the ground station 12, to allow for their demodulation and analysis at the ground station 12 or other location.

The first and second embodiments described above set out a monitoring process using a single monitoring satellite 11. However, according to further embodiments, a plurality of monitoring satellites 11 may for example be used to obtain beam status information. These monitoring satellites 11 may be used to monitor the same satellite 2 (or plurality of satellites 2), which may be useful for redundancy purposes - in the event of one of the monitoring satellites 11 failing, information may still be obtained on the satellite(s) 2 using the remaining monitoring satellite(s) 11. Additionally, latency is reduced, as a plurality of monitoring satellites 11 travelling along the same orbit, but at different times, will combine to provide status updates to a ground station 12 more frequently than just one of those monitoring satellites 11 operating alone. Furthermore, the use of multiple monitoring satellites would permit measurements for the beam or beams of a single satellite 2 to be made at a number of different angles - that is, each monitoring satellite 11 could be used to monitor the beam or beams 8 from a slightly different angle. This would also potentially allow the antenna beamwidth for each monitoring satellite to be narrowed, increasing the resolution with which each monitoring satellite 11 can identify a signal source. Alternatively, each of a plurality of monitoring satellites 11 may be used to monitor a respective satellite 2 (or plurality of satellites 2). As will be appreciated, using a plurality of monitoring satellites may potentially provide greater geographical coverage than a single monitoring satellite 11 operating alone, as each of the plurality of monitoring satellites 11 may have a different orbit.

Furthermore, although the embodiments described above set out a monitoring process using a single ground station 12, this does not have to be the case and a plurality of ground stations 12 may be provided, at geographically separate regions, each within UHF range of the orbit 11a of a monitoring satellite 11 or plurality of monitoring satellites 11. The monitoring satellite(s) 11 may then store and forward monitoring data to a given ground station 12 which was acquired only for satellites 2 monitored subsequent to the store and forward process conducted in respect of the previous ground station 12 encountered by the monitoring satellite 11. As a result, lesser demands may then be placed on the capacity of the data storage module 21, which need only store beam monitoring information for satellites 2 encountered between ground stations 12. Further, if the store and forward process for one ground station 12 is not completed e.g. as a result of climatic conditions, or is only partially completed e.g. due to a low data link rate, the monitoring satellite 11 may readily re-attempt or complete the forwarding of the data at the next ground station 12. Further, a plurality of ground stations 12 may be located at geographically dispersed positions so as to receive beam status information from respective monitoring satellites 11 travelling along different orbits.

Furthermore, according to the first embodiment, the ground station 12 processes the beam status information by performing ECEF compensation on the GPS position data, power compensation and calibration, and comparison with RAN transmission history data. However, according to further embodiments, one or more of these steps may be performed at other stations. For example, the ground station 12 may simply receive the monitoring information from the monitoring satellite, and transmit this information to another station for processing. In the first embodiment, measured power levels are compared against RAN transmission history data. However, this does not have to be the case. For example, other records could be used, such as records from frequency allocation servers.

The first and second embodiments above have been described with reference to monitoring an up-and-running communications satellite system. Embodiments of the invention may however be applied to other applications e.g. to monitor the status of beams of a communications satellite undergoing testing prior to introduction to full service. This may enable an early indication to be obtained of the functioning of, for example, a key hardware component such as an antenna of a satellite undergoing pre-service testing in space.

As will be appreciated, monitoring processes according to embodiments of the invention have a wide variety of potential applications. For example, and without limitation:
- As described above, an embodiment of a monitoring method according to the present invention might for example be used to monitor the operational status of a constellation of multibeam communications satellites, such as the Inmarsat-4™ satellite constellation;
- An embodiment of a monitoring method according to the present invention may for example be used in the provision of safety services, for example in identifying the failure of a spot beam of a multibeam communications satellite covering a region (such as Somali coastal waters) from where emergency calls may be expected to originate and/or may be expected to be directed, allowing prompt remedial action to be taken;
- An embodiment of a monitoring method according to the present invention might for example be used by a broadcast operator utilising a single-beam (as opposed to a multibeam) communications satellite, where the beam is wide but the broadcaster wishes to ensure that suitable geographical coverage is provided by the beam, or where the beam covers a remote or inaccessible area which would inhibit its monitoring by land-based means;
- An embodiment of a monitoring method according to the present invention might for example be used for spectrum co-ordination and policing purposes, to ensure that a plurality of communications satellites, for example operated by different providers, exclusively occupy (i.e. send and receive signals only within) a frequency range allocated to that communications satellite/provider. In such an embodiment, for example, a given beam may be monitored to confirm that signals are transmitted within the beam only at frequencies within the permitted range.

According to the first and second embodiments, the monitoring satellite is used to monitor a beam which is directed at the body around which the communications satellite orbits (the Earth in these embodiments). However, according to other embodiments, this does not have to be the case. For example, the communications satellite 2 may be in communications with (i.e. transmitting and/or receiving signals to/from) a communications device (e.g. another communications satellite) which is at substantially the same altitude or higher altitude than the communications satellite 2. For example, the communications satellite may be in a Mid Earth orbit and the communications device may be a communications satellite in a geostationary orbit. Alternatively, the communications device may be located at a lower altitude, but at a position laterally of the communications satellite 2. In these circumstances, the beam of the communications satellite may not be directed at the body around which the communications satellite orbits.

To monitor the beam in these circumstances, the orbit of the monitoring satellite is selected such that the monitoring satellite at least partially intercepts the beam. The monitoring satellite may intercept the beam at a position between the communications satellite 2 and the communications device.

Where the monitoring satellite is to be used to monitor for signals transmitted from the communications satellite to another satellite, the monitoring satellite may be arranged to monitor for signals transmitted at optical and/or laser frequencies, which are typically used for inter-satellite communications.

### Computer Systems

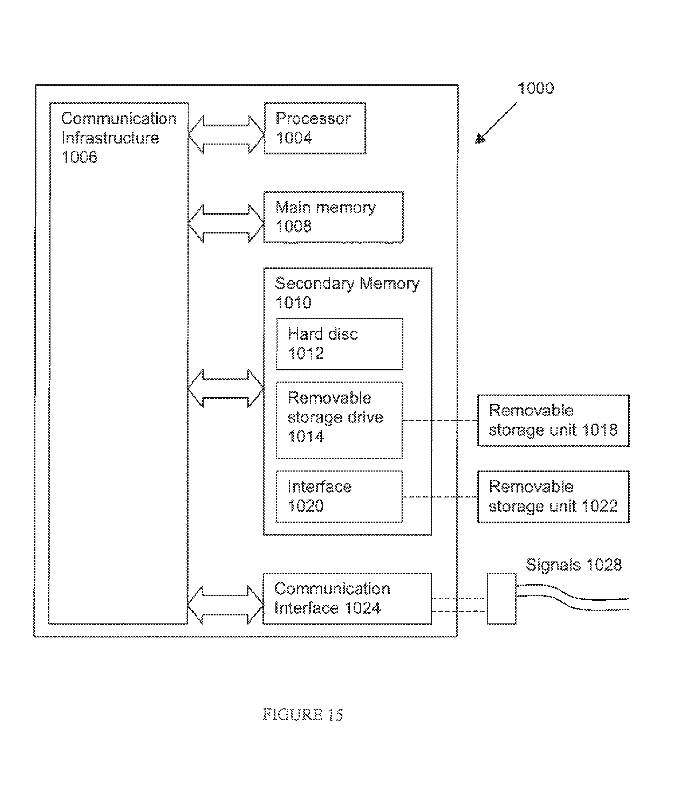

The entities described herein, such as the monitoring satellite payload and/or ground station, may be implemented by computer systems such as computer system 1000 as shown in Figure 15. Embodiments of the present invention may be implemented as programmable code for execution by such computer systems 1000. After reading this description, it will become apparent to a person skilled in the art how to implement the invention using other computer systems and/or computer architectures.

Computer system 1000 includes one or more processors, such as processor 1004. Processor 1004 may be any type of processor, including but not limited to a special purpose or a general-purpose digital signal processor. Processor 1004 is connected to a communication infrastructure 1006 (for example, a bus or network). Various software implementations are described in terms of this exemplary computer system. After reading this description, it will become apparent to a person skilled in the art how to implement the invention using other computer systems and/or computer architectures.

Computer system 1000 also includes a main memory 1008, preferably random access memory (RAM), and may also include a secondary memory 610. Secondary memory 1010 may include, for example, a hard disk drive 1012 and/or a removable storage drive 1014, representing a floppy disk drive, a magnetic tape drive, an optical disk drive, etc. Removable storage drive 1014 reads from and/or writes to a removable storage unit 1018 in a well-known manner. Removable storage unit 1018 represents a floppy disk, magnetic tape, optical disk, etc., which is read by and written to by removable storage drive 1014. As will be appreciated, removable storage unit 618 includes a computer usable storage medium having stored therein computer software and/or data.

In alternative implementations, secondary memory 1010 may include other similar means for allowing computer programs or other instructions to be loaded into computer system 1000. Such means may include, for example, a removable storage unit 1022 and an interface 1020. Examples of such means may include a program cartridge and cartridge interface (such as that previously found in video game devices), a removable memory chip (such as an EPROM, or PROM, or flash memory) and associated socket, and other removable storage units 1022 and interfaces 1020 which allow software and data to be transferred from removable storage unit 1022 to computer system 1000. Alternatively, the program may be executed and/or the data accessed from the removable storage unit 1022, using the processor 1004 of the computer system 1000.

Computer system 1000 may also include a communication interface 1024. Communication interface 1024 allows software and data to be transferred between computer system 1000 and external devices. Examples of communication interface 1024 may include a modem, a network interface (such as an Ethernet card), a communication port, a Personal Computer Memory Card International Association (PCMCIA) slot and card, etc. Software and data transferred via communication interface 1024 are in the form of signals 1028, which may be electronic, electromagnetic, optical, or other signals capable of being received by communication interface 1024. These signals 1028 are provided to communication interface 1024 via a communication path 1026. Communication path 1026 carries signals 1028 and may be implemented using wire or cable, fibre optics, a phone line, a wireless link, a cellular phone link, a radio frequency link, or any other suitable communication channel. For instance, communication path 1026 may be implemented using a combination of channels.

The terms "computer program medium" and "computer usable medium" are used generally to refer to media such as removable storage drive 1014, a hard disk installed in hard disk drive 1012, and signals 1028. These computer program products are means for providing software to computer system 1000. However, these terms may also include signals (such as electrical, optical or electromagnetic signals) that embody the computer program disclosed herein. Computer programs (also called computer control logic) are stored in main memory 1008 and/or secondary memory 1010. Computer programs may also be received via communication interface 1024. Such computer programs, when executed, enable computer system 1000 to implement embodiments of the present invention as discussed herein. Accordingly, such computer programs represent controllers of computer system 1000. Where the embodiment is implemented using software, the software may be stored in a computer program product and loaded into computer system 1000 using removable storage drive 1014, hard disk drive 1012, or communication interface 1024, to provide some examples. Alternative embodiments may be implemented as control logic in hardware, firmware, or software or any combination thereof.

Alternative embodiments may be envisaged, which nevertheless fall within the scope of the invention as defined by the claims. As explained above, the problems addressed by the invention are not confined to Inmarsat™ satellites, geostationary satellites or repeater satellites.

As will be appreciated, the present application discloses methods, monitoring satellites, a station, systems, a receiver, monitoring information, a computer program, a computer program product and apparatus according to the following clauses:
1. A method of monitoring at least one beam of a satellite, the at least one beam being directed at a body around which the satellite orbits, the method comprising monitoring the at least one beam using a monitoring satellite which orbits around the body.
2. The method of clause 1, wherein monitoring the at least one beam using the monitoring satellite comprises using the monitoring satellite to obtain monitoring information relating to the at least one beam.
3. The method of clause 2, wherein the monitoring information comprises information relating to the operational status of the beam.
4. The method of clause 2 or 3, wherein the satellite is intended to transmit at least one signal in the at least one beam, and wherein using the monitoring satellite to obtain monitoring information comprises using the monitoring satellite to seek to receive at least one signal from the satellite in the at least one beam.
5. The method of clause 4, wherein using the monitoring satellite to seek to receive at least one signal from the satellite in the at least one beam comprises using the monitoring satellite to monitor a plurality of frequencies for the reception of the at least one signal.
6. The method of clause 4 or 5, wherein the monitoring satellite receives at least one signal from the satellite in the at least one beam, and wherein monitoring the at least one beam using the monitoring satellite further comprises determining at least one property of the at least one received signal.
7. The method of clause 6, wherein the at least one property comprises a power level of the at least one received signal.
8. The method of clause 6 or 7, wherein the at least one property comprises a frequency of the at least one received signal.
9. The method of clause 6, wherein the at least one received signal comprises a modulated signal created by modulating a carrier signal with a modulating signal, and said determining comprises demodulating the modulated signal and determining at least one property of the modulating signal.
10. The method of any one of clauses 6 to 9, wherein the at least one received signal comprises a communications signal sent from the satellite to a user communications terminal.
11. The method of any one of clauses 6 to 9, wherein the at least one received signal comprises a test signal.
12. The method of clause 11, wherein the satellite transmits the test signal substantially constantly.
13. The method of clause 11 or 12, wherein at least one property of the test signal is known.
14. The method of clause 13, wherein the at least one property comprises at least one of frequency or power level.
15. The method of any one of clauses 6 to 14, wherein the monitoring satellite performs said determining at least one property, and wherein the monitoring information comprises a result of said determining at least one property.
16. The method of any one of clauses 2 to 15, wherein monitoring the at least one beam using the monitoring satellite further comprises using the monitoring satellite to transmit the monitoring information to a receiver.
17. The method of clause 16, wherein the monitoring satellite is provided with a memory for storing the monitoring information, and wherein said monitoring at least one beam comprises using the monitoring satellite to obtain said monitoring information at a first position along its orbit, store the monitoring information in the memory, and later transmit said monitoring information to a receiver when the monitoring satellite is subsequently located at a second position along its orbit, which second position is distinct from the first position.
18. The method of clause 16 or 17, wherein the receiver is located on the body.
19. The method of clause 17 or 18, wherein the monitoring satellite is provided with a GPS receiver and determines that it is located at the second position by use of the GPS receiver.
20. The method of clause 17 or 18, wherein the receiver transmits a ranging signal, and wherein the monitoring satellite determines that it is located at the second position upon receiving the ranging signal.
21. The method of any one of clauses 17 to 20, wherein the receiver transmits an acknowledgement signal to the monitoring satellite upon receipt of the monitoring information.
22. The method of clause 21, wherein the monitoring satellite deletes the monitoring information from said memory upon receiving the acknowledgement signal.
23. The method of any one of clauses 17 to 22, wherein the memory is of sufficient capacity to retain monitoring information obtained by the monitoring satellite during a plurality of its orbits.
24. The method of any one of clauses 17 to 23, wherein the monitoring information further comprises information relating to the time at which the at least one received signal is received by the monitoring satellite.
25. The method of any one of clauses 17 to 24, wherein the monitoring information further comprises information relating to the position of the monitoring satellite when the at least one received signal is received by the monitoring satellite.
26. The method of any one of clauses 2 to 25, wherein monitoring the at least one beam using the monitoring satellite further comprises analysing the monitoring information to determine an operational status of the at least one beam.
27. The method of clause 26, wherein analysing the data comprises calibrating the determined at least one property using a calibration signal transmitted in the at least one beam by the satellite.
28. The method of clause 27, further comprising comparing the calibrated, determined at least one property with at least one expected value.
29. The method of any one of clauses 26 to 28, wherein the receiver transmits the monitoring information, and/or information derived therefrom, across a network to a remote terminal.
30. The method of any one of clauses 26 to 29, wherein analysing the monitoring information comprises determining whether the monitoring satellite receives signals from the satellite in the at least one beam.
31. The method of any one of the preceding clauses, wherein the monitoring satellite transmits a monitoring signal to the satellite within the at least one beam, and wherein monitoring the at least one beam using the monitoring satellite comprises determining whether the satellite receives the monitoring signal.
32. The method of clause 31, wherein the satellite receives the monitoring signal, and wherein the method further comprises determining at least one property relating to the monitoring signal received by the satellite.
33. The method of clause 32, wherein the at least one property relates to a power level of the monitoring signal received by the satellite.
34. The method of clause 32 or 33, wherein the at least one property relates to a frequency of the monitoring signal received by the satellite.
35. The method of any one of clauses 31 to 34, wherein the monitoring satellite includes an indication of its current position in the monitoring signal.
36. The method of any one of clauses 31 to 35, wherein the satellite transmits a trigger signal in the at least one beam, and wherein the monitoring satellite sends the monitoring signal upon receiving the trigger signal.
37. The method of clause 36, wherein the monitoring satellite includes information relating to the trigger signal in the monitoring signal.
38. The method of clause 36 or 37, wherein the trigger signal includes an indication of the frequency at which the monitoring signal should be transmitted by the monitoring satellite.
39. The method of any one of the preceding clauses, wherein monitoring the at least one beam comprises monitoring the operational status of the at least one beam using the monitoring satellite.
40. The method of any one of the preceding clauses, wherein the body is the Earth, the satellite is in a substantially geostationary or geosynchronous orbit, and the monitoring satellite is in a substantially Low Earth Orbit.
41. The method of any one of the preceding clauses, wherein the monitoring satellite passes through the at least one beam each time it orbits around the body.
42. The method of any one of the preceding clauses, wherein the monitoring satellite comprises a nano-satellite.
43. The method of any one of the preceding clauses, wherein the at least one beam comprises at least one narrow spot beam.
44. The method of any one of the preceding clauses, wherein the satellite comprises a communications satellite.
45. The method of clause 44, wherein the satellite comprises a mobile communications satellite.
46. The method of any one of the preceding clauses, wherein the at least one beam comprises a plurality of beams.
47. The method of any one of the preceding clauses, further comprising using a further monitoring satellite to also monitor the at least one beam.
48. A method of monitoring at least one beam of a first satellite directed at a body around which the first satellite orbits and at least one beam of a second satellite directed at a body around which the second satellite orbits, the method comprising performing the method of any one of the preceding clauses for the first satellite and performing the method of any one of the preceding clauses for the second satellite.
49. The method of clause 48, comprising using the same monitoring satellite to monitor the at least one beam of both the first and second satellites.
50. The method of clause 49 dependent directly or indirectly upon clause 17, wherein the method further comprises using the monitoring satellite to transmit the monitoring information obtained in respect of the at least one beam of the first satellite to the receiver when the monitoring satellite is located at the second position, and to transmit the monitoring information obtained in respect of the at least one beam of the second satellite to a further receiver when the monitoring satellite is located at a third position along its orbit, said third position being distinct from the first and second positions.
51. The method of any one of the preceding clauses, when performed at least partially by the monitoring satellite.
52. The method of any one of clauses 1 to 50, when performed at least partially by at least one station located on the body.
53. A monitoring satellite arranged to at least partially perform the method of any one of clauses 1 to 50.
54. A station arranged to at least partially perform the method of any one of clauses 1 to 50, the station being located on the body.
55. A system for monitoring a satellite comprising the monitoring satellite of clause 53 and the station of clause 54.
56. A monitoring satellite for monitoring at least one beam of another satellite, the at least one beam being directed at a body around which the another satellite orbits, wherein the monitoring satellite is arranged to monitor a plurality of frequencies for the reception of at least one signal transmitted within the at least one beam by the another satellite.
57. A monitoring satellite for monitoring at least one beam of another satellite, the at least one beam being directed at a body around which the another satellite orbits, wherein the monitoring satellite is arranged to determine at least one property of at least one signal received by the monitoring satellite from the another satellite in the at least one beam.
58. The monitoring satellite of clause 57, wherein the monitoring satellite is further arranged to transmit information relating to the determination to a receiver.
59. The monitoring satellite of clause 57 or 58, wherein the at least one property comprises a power level of the at least one signal.
60. The monitoring satellite of any one of clauses 57 to 59, wherein the at least one property comprises a frequency of the at least one signal.
61. The monitoring satellite of clause 57 or 58, wherein the at least one signal comprises a modulated signal created by modulating a carrier signal with a modulating signal, and wherein the monitoring satellite is arranged to demodulate the modulated signal and to determine at least one property of the modulating signal.
62. A monitoring satellite for monitoring at least one beam of another satellite, the at least one beam being directed at a body around which the another satellite orbits, wherein the monitoring satellite is arranged to obtain monitoring information relating to the at least one beam and to transmit said monitoring information to a receiver.
63. A monitoring satellite for monitoring at least one beam of another satellite, the at least one beam being directed at a body around which the another satellite orbits, wherein the monitoring satellite is arranged to transmit at least one signal to the another satellite within the at least one beam.
64. A receiver for monitoring at least one beam of a satellite, the at least one beam being directed at a body around which the satellite orbits, the receiver being arranged to receive monitoring information obtained by a monitoring satellite and relating to the at least one beam.
65. The receiver of clause 64, wherein the receiver is located on a body around which the monitoring satellite orbits.
66. The receiver of clause 64 or 65, further arranged to process the monitoring information.
67. The receiver of clause 66, wherein the receiver is arranged to process the monitoring information by calibrating the monitoring information.
68. The receiver of clause 66 or 67, wherein the receiver is arranged to process the monitoring information by comparing the monitoring information with at least one expected value.
69. A system for monitoring at least one beam of a satellite, the system comprising a monitoring satellite according to any one of clauses 56 to 63 and a receiver according to any one of clauses 64 to 68.
70. A method of monitoring a satellite having a beam extending from said satellite to a device to enable signals to be sent between the satellite and the device, the method comprising monitoring the beam using a monitoring satellite which at least partially intercepts the beam.
71. A method of monitoring a satellite, the method comprising monitoring first and second beams of the satellite using a monitoring satellite.
72. The method of clause 71, wherein the monitoring satellite moves through the first beam and subsequently moves through the second beam as it moves along its orbit.
73. The method of clause 71 or 72, further comprising deriving positional data relating to the position of the monitoring satellite as it monitors the first and second beams.
74. A method of monitoring a satellite, the method comprising using a monitoring satellite to determine at least one property of a signal transmitted by the satellite, wherein the monitoring satellite receives said signal and transmits information associated with said signal to a receiver.
75. The method of clause 74, wherein the receiver is located on a body around which the monitoring satellite orbits.
76. The method of clause 74 or 75, wherein the monitoring satellite receives the signal when the monitoring satellite is located at a first position, stores said information associated with said signal and subsequently transmits said information associated with said signal to the receiver when the monitoring satellite is located at a second position distinct from said first position.
77. The method of any one of clauses 74 to 76, wherein said information associated with said signal comprises the result of a determination of the at least one property of the signal made by the monitoring satellite.
78. A method of identifying a source of potential interference with a beam of a satellite, the method comprising using a monitoring satellite to detect a signal at least at one frequency used by the satellite for transmissions in the beam, determining whether the detected signal is attributable to the beam, and identifying the detected signal as originating from a source of potential interference where the detected signal is not attributable to the beam.
79. The method of clause 78, wherein said determining whether a detected signal is attributable to the beam comprises comparing the detected signal with at least one signal known to have been transmitted in the beam.
80. The method of clause 78, said wherein determining whether a detected signal is attributable to the beam comprises determining whether the monitoring satellite was located within the beam when the detected signal was detected.
81. Monitoring information according to any one of clauses 2 to 30.
82. A computer program arranged to at least partially perform the method of any one of clauses 1 to 52 or 70 to 80.
83. A computer program product incorporating a computer program according to clause 82.
84. Apparatus arranged to perform the method of any one of clauses 1 to 52.
85. Apparatus arranged to perform the method of clause 70.
86. Apparatus arranged to perform the method of any one of clauses 71 to 73.
87. Apparatus arranged to perform the method of any one of clauses 74 to 77.
88. Apparatus arranged to perform the method of any one of clauses 78 to 80.

## Claims

1. A method of monitoring at least one beam of a satellite, the at least one beam being directed at a body around which the satellite orbits, the method comprising monitoring the at least one beam using a monitoring satellite which orbits around the body.

2. The method of claim 1, wherein monitoring the at least one beam using the monitoring satellite comprises using the monitoring satellite to obtain monitoring information relating to the at least one beam.

3. The method of claim 2, wherein the satellite is intended to transmit at least one signal in the at least one beam, and wherein using the monitoring satellite to obtain monitoring information comprises using the monitoring satellite to seek to receive at least one signal from the satellite in the at least one beam.

4. The method of claim 3, wherein using the monitoring satellite to seek to receive at least one signal from the satellite in the at least one beam comprises using the monitoring satellite to monitor a plurality of frequencies for the reception of the at least one signal.

5. The method of claim 3 or 4, wherein the monitoring satellite receives at least one signal from the satellite in the at least one beam, and wherein monitoring the at least one beam using the monitoring satellite further comprises determining at least one property of the at least one received signal.

6. The method of claim 5, wherein the monitoring satellite performs said determining at least one property, and wherein the monitoring information comprises a result of said determining at least one property.

7. The method of any one of claims 2 to 6, wherein monitoring the at least one beam using the monitoring satellite further comprises using the monitoring satellite to transmit the monitoring information to a receiver, and/or wherein monitoring the at least one beam using the monitoring satellite further comprises analysing the monitoring information to determine an operational status of the at least one beam.

8. The method of any one of the preceding claims, wherein the monitoring satellite transmits a monitoring signal to the satellite within the at least one beam, and wherein monitoring the at least one beam using the monitoring satellite comprises determining whether the satellite receives the monitoring signal.

9. A method of monitoring at least one beam of a first satellite directed at a body around which the first satellite orbits and at least one beam of a second satellite directed at a body around which the second satellite orbits, the method comprising performing the method of any one of the preceding claims for the first satellite and performing the method of any one of the preceding claims for the second satellite.

10. A monitoring satellite for monitoring at least one beam of another satellite, the at least one beam being directed at a body around which the another satellite orbits, wherein the monitoring satellite is arranged to monitor a plurality of frequencies for the reception of at least one signal transmitted within the at least one beam by the another satellite and/or is arranged to determine at least one property of at least one signal received by the monitoring satellite from the another satellite in the at least one beam.

11. A monitoring satellite for monitoring at least one beam of another satellite, the at least one beam being directed at a body around which the another satellite orbits, wherein the monitoring satellite is arranged to obtain monitoring information relating to the at least one beam and to transmit said monitoring information to a receiver.

12. A receiver for monitoring at least one beam of a satellite, the at least one beam being directed at a body around which the satellite orbits, the receiver being arranged to receive monitoring information obtained by a monitoring satellite and relating to the at least one beam.

13. A system for monitoring at least one beam of a satellite, the at least one beam being directed at a body around which the satellite orbits, the system comprising a monitoring satellite according to claim 10 or 11 and a receiver according to claim 12.

14. A computer program arranged to at least partially perform the method of any one of claims 1 to 9.

15. Apparatus arranged to at least partially perform the method of any one of claims 1 to 9.
